# EUROPEAN PATENT SPECIFICATION

(11) **EP 3 647 255 B1**
(45) Date of publication and mention of the grant of the patent: **20.12.2023**
(21) Application number: 18824545.0
(22) Date of filing: 28.06.2018
(51) Int. Cl.: B66F 19/00, B25J 11/00, B66D 3/18, B25J 9/00

(54) **ASSIST DEVICE WITH HAND PORTIONS FOR HOLDING BAGGAGE**
UNTERSTÜTZUNGSVORRICHTUNG MIT HANDSTÜCKEN ZUM HALTEN VON GEPÄCK
DISPOSITIF D'ASSISTANCE AVEC PIÈCES DE MAIN POUR TENIR DES BAGAGES

(30) Priority: 29.06.2017 JP 2017127465; 29.06.2017 JP 2017127466; 29.06.2017 JP 2017127470
(43) Date of publication of application: 06.05.2020
(73) Proprietor: Kubota Corporation, Osaka-shi, Osaka 556-8601 (JP)
(72) Inventor: SAKANO Tomoyoshi, Sakai-shi Osaka 590-0823 (JP); NAKATSUKA Masaki, Sakai-shi Osaka 590-0823 (JP); KOTANI Shinsuke, Sakai-shi Osaka 590-0823 (JP); SHIOTA Tatsuya, Sakai-shi Osaka 590-0823 (JP); OKUNO Mayuko, Sakai-shi Osaka 590-0823 (JP)
(74) Representative: Cabinet Beau de Loménie
(86) International application number: PCT/JP2018/024548
(87) International publication number: WO 2019/004345

(56) References cited:
- JP-A- 2001 241 038
- JP-A- 2005 003 029
- JP-A- 2013 052 192
- JP-A- 2015 182 833
- JP-A- 2016 008 103
- JP-A- 2016 008 103
- JP-A- 2016 130 159
- JP-A- 2016 130 159
- JP-A- 2017 094 423
- JP-U- H03 127 688
- JP-Y1- S4 914 826
- US-A- 5 004 108

## Description

### Technical Field

The present invention relates to an assist device for assisting work (movement) performed by a worker that is to be used worn by the worker, and a hand portion for load-holding.

### Background Art

Such assist devices as that mentioned above include that disclosed in Patent Document 1.

In Patent Document 1, a main body portion that is to be attached to a mid back portion of a worker, and right and left arm portions that extend forward from the main body portion are provided. The main body portion is provided with a lifting/lowering device, and right and left wires extend from the lifting/lowering device. The wires extend along the arm portions, are wrapped around rotating bodies at upper portions of the arm portions, and then extend downward, and the right and left hand portions are connected to extension ends of the wires.

The hand portions (package) are raised by winding the wires using the lifting/lowering device in a state where a package is held by the hand portions, and the hand portions (package) are lowered by unwinding the wires using the lifting/lowering device.

In Patent Document 1, a package is held by holding a right portion of the package with the right hand portion, and holding a left portion of the package with the left hand portion. In this case, since the right and left hand portions are suspended by the wires, the distance in the left-right direction between the right and left hand portions can be set to any distance, and even packages with different widths can be held by the right and left hand portions.

In an assist device disclosed in Patent Document 2, a main body portion includes a lifting/lowering device for winding and unwinding wires, and the hand portions include manual operation portions for operating the lifting/lowering device in winding and unwinding directions.

The worker can hold the hand portions in their holds and hold a package with the hand portions, and can raise and lower the hand portions by operating the manual operation portions with their hands on the hand portions.

### Prior Art Documents

### Patent Documents

Patent Document 1: JP 2016-129916A
Patent Document 2: JP 2015-182832A

JP 2016 130159 A discloses an assist device according to the preamble of appended claim 1.

### Disclosure of the Invention

### Problem to be Solved by the Invention

When packages with different widths are to be held by the right and left hand portions of the assist device in Patent Document 1, in the case of a package with a large width, the wires may extend diagonally outward to the right and left sides from the rotating bodies of the right and left arm portions. Conversely, in the case of a package with a small width, the wires may extend diagonally inward to the right and left sides from the rotating bodies of the right and left arm portions.

If such a state is entered, the wires do not extend from the rotating bodies of the arm portions in rotational directions of the rotating bodies of the arm portions, but extend diagonally intersecting the rotational directions of the rotating bodies of the arm portions, from the rotating bodies of the arm portions.

Accordingly, if, in this state, the wires are repeatedly wound and unwound by the lifting/lowering device, this may lead to wear of the rotating bodies of the arm portions and the wires, and thus there is room for improvement.

Patent Document 2 is envisioned for use with a package that has opening portions in side wall portions of the package, as with a beer case, and the package is held by the hand portions by inserting lower portions of the hand portions into the openings in the side wall portions of the package.

As for packages, not all packages have opening portions in the side wall portions as mentioned above, and there may be packages that do not have opening portions in the side wall portions.

Accordingly, it is desired that a hand portion for load-holding appropriately holds a package even if no opening portion is provided in a side wall portion of the package.

### Means for Solving Problem

An assist device according to an embodiment of the present invention is defined in appended claim 1.

According to the configuration defined in claim 1, if, for example, a package with a large width is to be held by the right and left hand portions, the orientations of the right and left support members can be changed about the extension axes of the arm portions such that the wires extend diagonally outward to the right and left sides from the rotating bodies of the right and left support members, and the orientations of the support members can be fixed by the fixing portions.

If, for example, a package with a small width is to be held by the right and left hand portions, the orientations of the right and left support members can be changed about the extension axes of the arm portions such that the wires extend diagonally inward to the right and left sides from the rotating bodies of the right and left support members, and the orientations of the support members can be fixed by the fixing portions.

According to this configuration, the wires can be brought close to a state of extending from the rotating bodies of the support members in the rotational direction of the rotating bodies of the support members, by changing and fixing the orientations of the support members as mentioned above.

With this configuration, if the right and left wires are wound and unwound by the lifting/lowering device and the right and left hand portions are raised and lowered, the right and left wires are wound and unwound substantially in a state where the right and left wires extend from the rotating bodies of the support members in the rotational direction of the rotating bodies of the right and left support members. Wear of the rotating bodies of the support members and the wires is thus suppressed, and durability can be improved.

In the present invention, it is preferable that
as a result of the support members being fitted to extension end portions of the arm portions, the support members are supported by the extension end portions of the arm portions so as to be capable of changing their orientations about the respective extension axes, and
each of the fixing portions include:
   a first spline portion attached to an extension end portion of a corresponding one of the arm portions;
   a second spline portion attached to a corresponding one of the support members; and
   a withdrawal prevention member configured to prevent the corresponding one of the support members from withdrawing from the extension end portion of the corresponding one of the arm portions, in a state where the first spline portion and the second spline portion are fitted to each other.

According to the above configuration, the support members are fitted to the extension end portions of the arm portions, and the orientations of the support members can be readily changed by rotating the support members about the extension end portions of the arm portions.

In the case of fixing the orientations of the support members, the orientations of the support members can be fixed without issue by fitting the first spline portions of the arm portions and the second spline portions of the support members to each other and preventing withdrawal of the support members using the withdrawal prevention members.

In the present invention, it is preferable that
as a result of the support members being fitted to extension end portions of the arm portions, the support members are supported by the extension end portions of the arm portions so as to be capable of changing their orientations about the respective extension axes, and
each of the fixing portions include;
an engaging portion provided in one of an extension end portion of a corresponding one of the arm portions and a corresponding one of the support members;
a plurality of engaged portions provided in a circumferential direction in the other one of the extension end portion of the corresponding one of the arm portions and the corresponding one of the support members; and
a withdrawal prevention member configured to prevent the corresponding one of the support members from withdrawing from the extension end portion of the corresponding one of the arm portions, in a state where the engaging portion is engaged with the engaged portions.

According to the above configuration, the support members are fitted to the extension end portions of the arm portions, and the orientations of the support members can be readily changed by rotating the support members about the extension end portions of the arm portions.

In the case of fixing the orientations of the support members, the orientations of the support members can be fixed without issue by preventing withdrawal of the support members using the withdrawal prevention members in a state where the engaging portion is engaged with a desired one of the engaged portions.

An assist device according to an embodiment which is not part of the present invention includes: a main body portion to be attached to a mid back portion of a worker; right and left arm portions that extend forward from the main body portion; and a lifting/lowering device that is provided in the main body portion and winds and unwinds wires,
the assist device comprising:
right and left support members supported by the arm portions so as to be capable of freely changing their orientations about respective extension axes parallel to directions in which the arm portions extend; and
right and left rotating bodies supported by the support members so as to be capable of rotating about respective lateral axes that intersect the extension axes,
wherein the left and right wires that extend from the lifting/lowering device are wrapped around the rotating bodies and extend downward from the rotating bodies, and right and left hand portions configured to hold a package are connected to extension ends of the wires, and
the lifting/lowering device raises the hand portions by winding the wires, and the lifting/lowering device lowers the hand portions by unwinding the wires.

According to the above configuration, when a package with a large width is to be held by the right and left hand portions, upon the right and left wires entering a state of extending diagonally outward to the right and left sides, the support members that support the rotating bodies change their orientations about the extension axes parallel to the directions in which the arm portions extend, so as to follow a change in the orientations of the wires.

Similarly, when a package with a small width is to be held by the right and left hand portions, upon the right and left wires entering a state of extending diagonally inward to the right and left sides, the support members that support the rotating bodies change their orientations about the extension axes parallel to the direction in which the arm portions extend, so as to follow a change in the orientations of the wires.

According to the above configuration, when packages with different widths are to be held as mentioned above, the orientations of the support members change in accordance with the widths of the packages, and a state can be achieved where the wires extend from the rotating bodies of the support members in the rotational direction of the rotating bodies of the support members.

With this configuration, if the right and left wires are wound and unwound by the lifting/lowering device and the right and left hand portions are raised and lowered, the right and left wires are wound and unwound in a state where the right and left wires extend from the rotating bodies of the support members in the rotational direction of the rotating bodies of the right and left support members. Wear of the rotating bodies of the support members and the wires is thus suppressed, and durability can be improved.

In the present embodiment which is not part of the invention, it is preferable that
the lateral axes are arranged below the extension axes.

As mentioned above, when the right and left wires enter a state of extending diagonally outward (inward) to the right and left sides, a change in the orientations of the wires is transmitted to the rotating bodies and is then transmitted from the rotating bodies to the support members, and the orientations of the support members change.

If, as with the above configuration, the lateral axes of the rotating bodies are arranged below the extension axes of the support members, a change in the orientations of the wires is transmitted to the rotating bodies as mentioned above. If the orientations of the rotating bodies are about to change, a relatively large moment is generated based on the lengths between the extension axes of the support members and the lateral axes of the rotating bodies, and the orientations of the support members are changed without issue by this moment.

With this configuration, the orientations of the support members change without delay with respect to the change in the orientations of the wires, and a state where the wires extend from the rotating bodies of the support members in the rotational direction of the rotating bodies of the support members can be achieved without delay. Wear of the rotating bodies of the support members and the wires is thus suppressed, and durability can be improved.

In the present embodiment which is not part of the invention, it is preferable that
guide portions configured to guide the wires are provided at portions of the support members on the hand portion side relative to the rotating bodies.

According to the above configuration, if the orientations of the wires change as mentioned above, the guide portions move following the change in the orientations of the wires, and thus, a relatively large moment is generated based on the lengths between the extension axes of the support members and the guide portions.

In this case, the lengths between the extension axes of the support members and the guide portions are larger than the aforementioned lengths between the extension axes of the support members and the lateral axes of the rotating bodies, and thus, a large moment is generated based on the distances between the extension axes of the support members and the guide portions due to the change in the orientations of the wires, and the orientations of the support members change without issue.

With this configuration, the orientations of the support members change without delay with respect to the change in the orientations of the wires, and a state where the wires extend from the rotating bodies of the support members in the rotational direction of the rotating bodies of the support members can be achieved without delay. Wear of the rotating bodies of the support members and the wires is thus suppressed, and durability can be improved.

In the present embodiment which is not part of the invention, it is preferable that
wire support portions configured to support the wires are provided at portions of the support members on the lifting/lowering device side relative to the rotating bodies.

According to the above configuration, if the orientations of the support members change, the orientations of the wire support portions of the support members also change.

Thus, the wires can also extend in the rotational directions of the rotating bodies of the support members at portions on the lifting/lowering device side relative to the rotating bodies. Wear of the rotating bodies of the support members and the wires is thus suppressed, and durability can be improved.

A hand portion for load-holding according to an embodiment which is not part of the present invention is a hand portion for load-holding that is connected to and suspended from a suspension mechanism, comprising:
a lateral portion to be arranged in a vertical direction along an outer side of a side wall portion of a package;
a lower portion that is to extend toward the side wall portion of the package from a lower portion of the lateral portion and is to be brought toward the side wall portion of the package;
an inner portion to be arranged in the vertical direction along an inner side of the side wall portion of the package;
a movement support portion configured to support the inner portion such that the inner portion can move in an approaching direction in which the inner portion moves downward to approach the lower portion and in a separating direction in which the inner portion moves upward away from the lower portion;
a biasing portion configured to bias the inner portion in the separating direction; and
a manual operation portion for operating the inner portion in the approaching direction against the biasing portion.

According to the above configuration, if a package is to be held by the hand portion, the lateral portion of the hand portion is positioned on an outer side of the side wall portion of the package, the lower portion of the hand portion is brought toward the side wall portion of the package, and the inner portion of the hand portion is positioned on the inner side of the side wall portion of the package.

Thus, if the weight of the package is applied to the hand portion, the weight of the package is supported by the lower portion of the hand portion, and even if the hand portion begins to come off of the side wall portion of the package, a state where the hand portion begins to come off of the side wall portion of the package is suppressed due to the inner portion of the hand portion coming into contact with the inner side of the side wall portion of the package. This state is entered whether an opening portion is provided or not provided in the side wall portion of the package.

According to the above configuration, the inner portion of the hand portion can move in the approaching direction in which the inner portion moves downward to approach the lower portion of the hand portion, and in the separating direction in which the inner portion moves upward away from the lower portion of the hand portion, and the inner portion of the hand portion is biased in the separating direction by the biasing portion.

As a result, in a state where the worker is not operating the manual operation portion, the inner portion of the hand portion is operated in the separating direction, and the hand portion is open wide between the lower portion and the inner portion thereof. Thus, the side wall portion of the package can be readily entered between the lower portion and the inner portion of the hand portion, the lower portion of the hand portion can be readily brought toward the side wall portion of the package, and thus good operability is achieved.

After the side wall portion of the package has entered between the lower portion and the inner portion of the hand portion, and the lower portion of the hand portion has been brought toward the side wall portion of the package, the worker can operate the inner portion of the hand portion in the approaching direction against the biasing portion by operating the manual operation portion of the hand portion.

Thus, the inner portion of the hand portion can be appropriately positioned on the inner side of the side wall portion of the package, and a state where the hand portion begins to come off of the side wall portion of the package can be appropriately suppressed by the inner portion of the hand portion.

In the present embodiment which is not part of the invention, it is preferable that
the hand portion further comprises an upper portion that is to extend from an upper portion of the lateral portion toward the side wall portion of the package and is to be arranged above the side wall portion of the package.

According to the above configuration, the side wall portion of the package is positioned between the lower portion and the upper portion of the hand portion.

Thus, not only is the weight of the package supported by the lower portion of the hand portion, even if the side wall portion of the package begins to move upward away from the lower portion of the hand portion due to shaking or the like of the package and the hand portion, the side wall portion of the package comes into contact with the upper portion of the hand portion, and the side wall portion of the package is thus restrained from moving upward.

In the present embodiment which is not part of the invention, it is preferable that
the movement support portion supports the inner portion such that the inner portion can move in the approaching direction and the separating direction, and supports the inner portion such that the inner portion can move between a first position located along the inner side of the side wall portion of the package and a second position separate from the first position on a side opposite to the side wall portion, and
the hand portion further comprises an interlocking operation portion configured to operate the inner portion to the first position if the inner portion is operated in the approaching direction by the manual operation portion.

According to the above configuration, in a state where the worker is not operating the manual operation portion, not only is the inner portion of the hand portion operated in the separating direction, but also the inner portion of the hand portion can be positioned at the second position separate from the lateral portion of the hand portion.

Thus, the hand portion is further open between the lower portion and the inner portion thereof. Thus, the side wall portion of the package can readily enter between the lower portion and the inner portion of the hand portion, and the lower portion of the hand portion can be readily brought toward the side wall portion of the package, and thus good operability is achieved.

After the side wall portion of the package has entered between the lower portion and the inner portion of the hand portion, and the lower portion of the hand portion has been brought toward the side wall portion of the package, if the worker operates the manual operation portion of the hand portion to operate the inner portion of the hand portion in the approaching direction, the inner portion of the hand portion is operated from the second position to the first position, and the inner portion of the hand portion can be appropriately positioned on the inner side of the side wall portion of the package. Thus, a state where the hand portion begins to come off of the side wall portion of the package can be appropriately suppressed by the inner portion of the hand portion.

In the present embodiment which is not part of the invention, it is preferable that
the hand portion further comprises an interlocking biasing portion configured to bias the inner portion toward the second position, and
the interlocking operation portion operates the inner portion to the first position against the interlocking biasing portion.

According to the above configuration, in a state where the worker is not operating the manual operation portion, not only is the inner portion of the hand portion operated in the separating direction, the inner portion of the hand portion is operated to the second position. Thus, the worker need not manually operate the inner portion of the hand portion to the second position, and good operability is achieved.

Due to the worker operating the manual operation portion of the hand portion, the inner portion of the hand portion can be operated in the approaching direction against the biasing portion, and the inner portion of the hand portion can be operated to the first position against the interlocking biasing portion.

In the present embodiment which is not part of the invention, it is preferable that
the manual operation portion includes a manual lifting/lowering operation portion for operating the suspension mechanism.

In the case of employing a configuration to operate the suspension mechanism, the hand portion may be provided with a manual lifting/lowering operation portion for operating the suspension mechanism.

According to the above configuration, the manual operation portion of the hand portion includes the manual lifting/lowering operation portion, and thus, the worker can operate the manual lifting/lowering operation portion while operating the manual operation portion, and good operability is achieved.

### Brief Description of the Drawings

FIG. 1 is a right side view of a state where a worker is wearing an assist device.
FIG. 2 is rear view of the state where the worker is wearing the assist device.
FIG. 3 is a perspective view of the assist device.
FIG. 4 is a perspective view of a support member and a surrounding region thereof.
FIG. 5 is a vertical cross-sectional view of the support member and a surrounding region thereof.
FIG. 6 is an exploded side view of an extension end portion of an arm portion and the support member.
FIG. 7 is a vertical front view of the support member and a guide portion.
FIG. 8 is a front view of a state of support members holding a package with a large width, pulleys, and wires.
FIG. 9 is a front view of a state of the support members holding a package with a small width, the pulleys, and the wires.
FIG. 10 is an exploded side view of the extension end portion of the arm portion and the support member according to a first variation of Embodiment 1.
FIG. 11 is a side view of the extension end portion of the arm portion and the support member according to the first variation of Embodiment 1.
FIG. 12 is an exploded side view of the extension end portion of the arm portion and the support member according to a second variation of Embodiment 1.
FIG. 13 is a side view of the extension end portion of the arm portion and the support member according to the second variation of Embodiment 1.
FIG. 14 is a vertical cross-sectional view of the support member and a surrounding region thereof.
FIG. 15 is a perspective view of the guide portion.
FIG. 16 is a vertical cross-sectional view of the support member according to a first variation of Embodiment 2.
FIG. 17 is a vertical cross-sectional view of the support member according to a second variation of Embodiment 2.
FIG. 18 is a vertical cross-sectional view of the support member according to a second variation of Embodiment 2.
FIG. 19 is an exploded perspective view of the hand portion.
FIG. 20 is a side view of the hand portion.
FIG. 21 is a vertical front view showing a state of holding a package with the hand portion.
FIG. 22 is a vertical front view showing a state of holding a package with the hand portion.
FIG. 23 is a vertical front view showing a state of holding a package with the hand portion.
FIG. 24 is an exploded perspective view of the hand portion according to a first variation of Embodiment 3.
FIG. 25 is a vertical front view of the hand portion according to the first variation of Embodiment 3.
FIG. 26 is a vertical front view of the hand portion according to the first variation of Embodiment 3.

### Best Mode for Carrying out the Invention

### Embodiment 1

The front-rear direction and the left-right direction in the embodiments of the present invention are defined as follows unless particularly stated otherwise. In the state where the worker is wearing the assist device, the front side from the worker's viewpoint corresponds to "front", the rear side corresponds to "rear", the right side corresponds to "right", and the left side corresponds to "left".

### Overall configuration of assist device, and main body portion

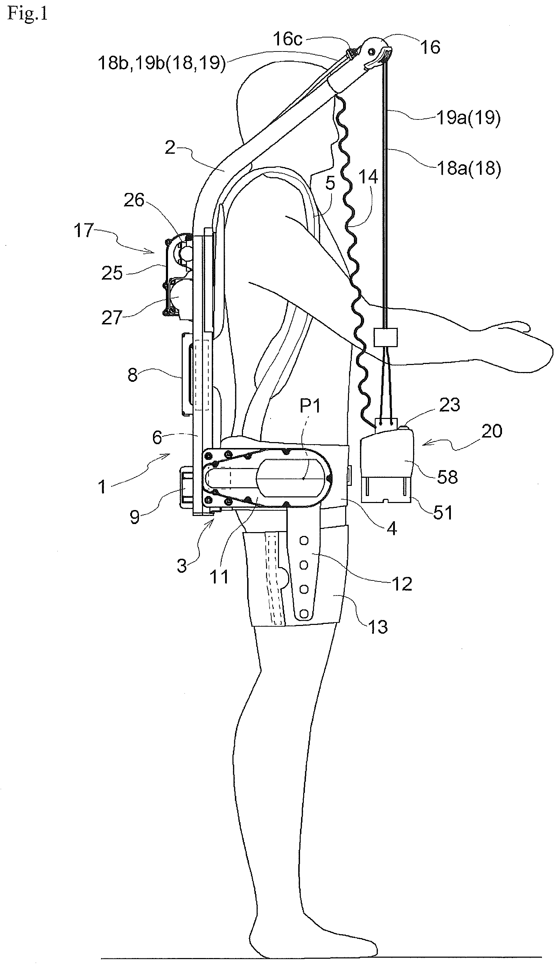

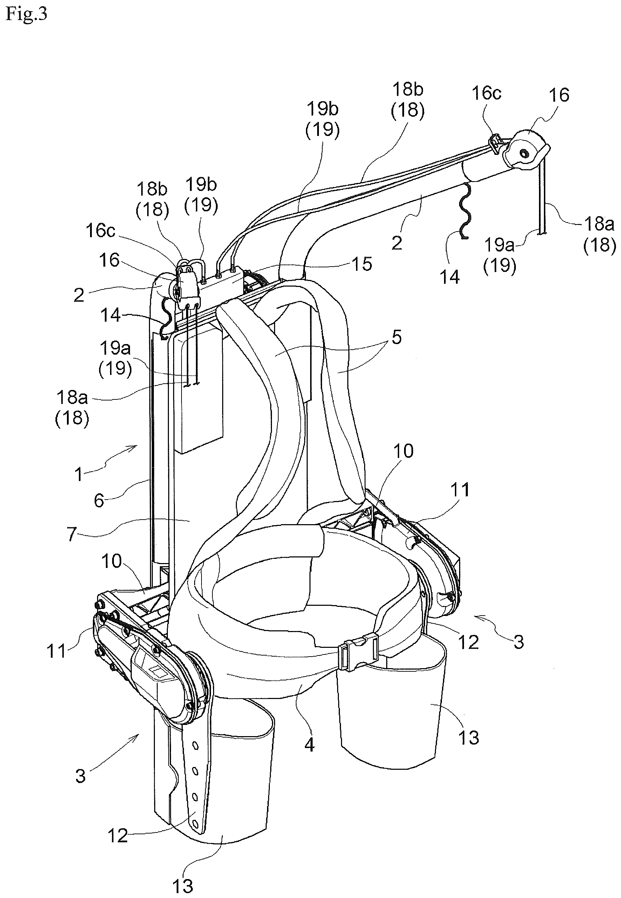

As shown in FIGS. 1, 2, and 3, the assist device includes a main body portion 1 that is attached to a mid back portion of the worker, right and left arm portions 2 that extend upward from an upper portion of the main body portion 1 and then extend forward, and right and left leg action portions 3 provided in a lower portion of the main body portion 1, and further includes an attachment belt 4 and right and left shoulder belts 5 for attachment to the worker.

As shown in FIGS. 1, 2, and 3, the main body portion 1 is frame-shaped and includes right and left vertical frames 6, a support plate 7 that is extends between and is coupled to the right and left vertical frames 6, and the like. The attachment belt 4 is attached to the leg action portions 3, and the shoulder belts 5 are attached to an upper portion of the front surface of the support plate 7. A control device 8 is attached to a vertically intermediate portion of the rear surface of the support plate 7, and a battery 9 is attached to a lower portion of the rear surface of the support plate 7.

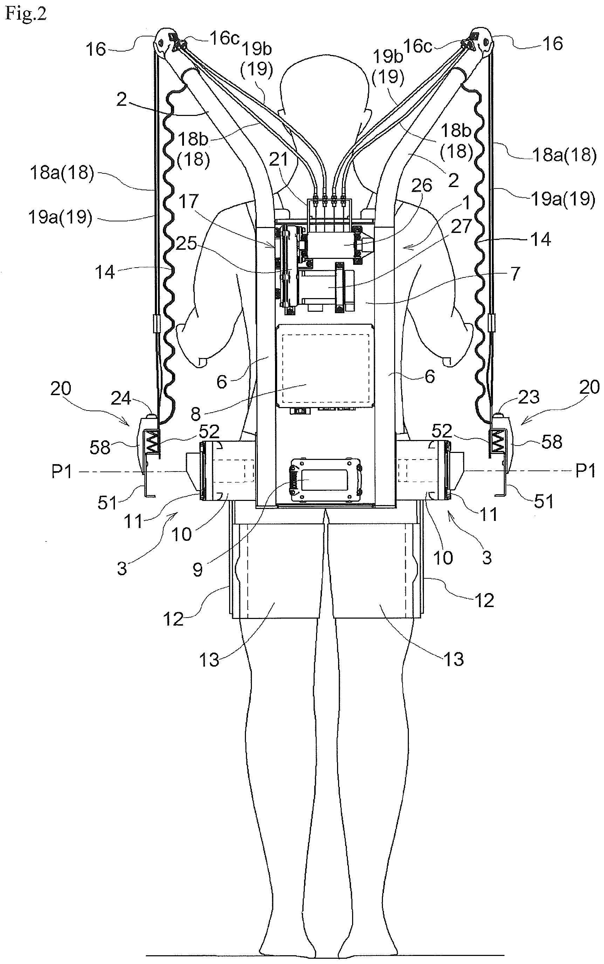

As shown in FIGS. 1 and 2, the main body portion 1 is attached to the mid back portion of the worker by the arm portions (shoulder portions) of the worker being put into the shoulder belts 5, and by the attachment belt 4 being wrapped around the waist portion of the worker.

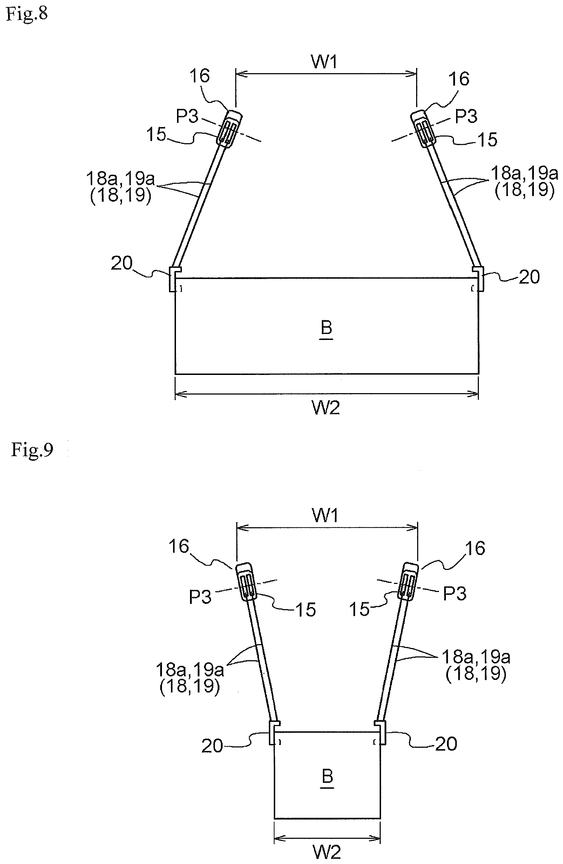

As shown in FIGS. 1 and 2, the weight of the assist device and a package B (see FIGS. 8 and 9) is mainly borne by the waist portion of the worker via the attachment belt 4, and the weight of the assist device and the package B is stably supported by the waist portion of the worker. The right and left shoulder belts 5 mainly exhibit a function of preventing the main body portion 1 from moving backward away from the mid back portion of the worker.

### Right and left leg action portions

As shown in FIGS. 1, 2, and 3, the leg action portions 3 each have a base portion 10, a transmission case 11, an operation arm 12, a leg belt 13, and the like. The base portion 10 is supported to a lower portion of the support plate 7 so as to be capable of sliding in the left-right direction, and the transmission case 11 is coupled to an outer end portion of the base portion 10 and extends forward.

As shown in FIGS. 1, 2, and 3, the operation arm 12 is supported to a front portion of the transmission case 11 so as to be capable of swinging about a horizontal axis P1 extending in the left-right direction, and the leg belt 13, which is shaped as a wide belt, is attached to the operation arm 12. A transmission mechanism (not shown) constituted by multiple spur gears is provided inside the transmission case 11, an electrical motor (not shown) is provided inside the base portion 10. The operation arm 12 is driven by the electrical motor via the transmission mechanism so as to swing about the horizontal axis P1.

When the worker wraps the attachment belt 4 around their waist portion in order to attach the main body portion 1 to their mid back portion, the right and left leg action portions 3 (base portions 10) can, together with the attachment belt 4, move in the left-right direction along the support plate 7.

Accordingly, the space between the right and left leg action portions 3 is determined so as to suit the worker's physique by adjusting the wrapping of the attachment belt 4 around the waist portion, and the positions of the right and left leg action portions 3 are determined by the attachment belt 4.

Thereafter, as shown in FIGS. 1 and 2, the worker wraps the leg belts 13 around their thigh portions and attaches the leg belts 13 to their thigh portions with use of a hook-and-loop fastener (not shown; Magictape (registered trademark)).

While the worker is wearing the assist device, the right leg action portion 3 (transmission case 11) is located on the right side of the waist portion of the worker, and the left leg action portion 3 (transmission case 11) is located on the left side of the waist portion of the worker.

### Right and left arm portions

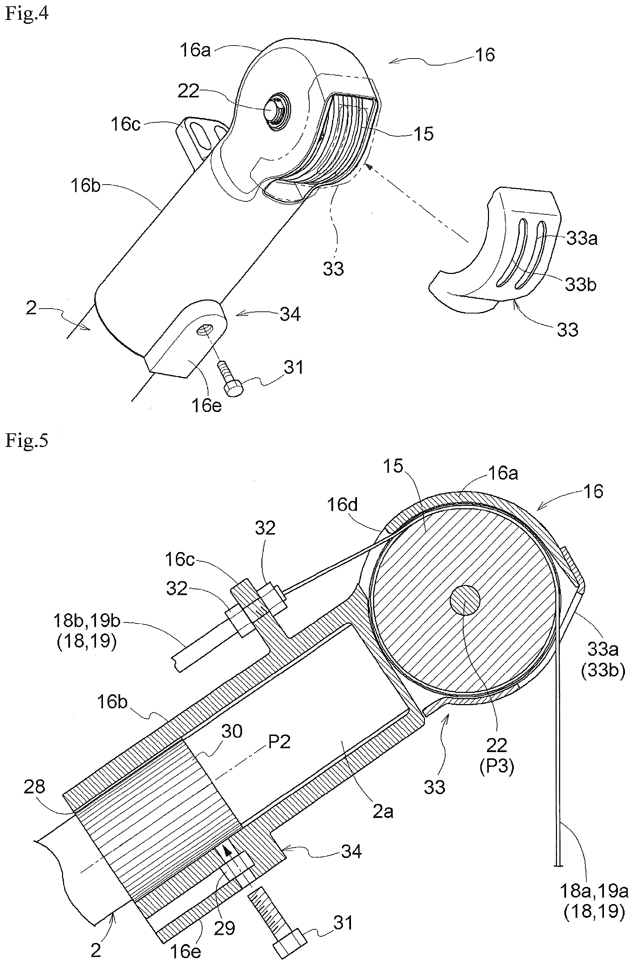

As shown in FIGS. 1, 2, and 3, upper portions of the right and left vertical frames 6 extend diagonally forward and upward to positions beyond the right and left shoulder portions of the worker as the right and left arm portions 2. As shown in FIGS. 4 and 5, right and left support members 16 are supported by extension end portions 2a of the arm portions 2, and right and left pulleys 15 (corresponding to rotating bodies) are rotatably supported by the support members 16.

As shown in FIGS. 1, 2, and 3, a lifting/lowering device 17 is attached to an upper portion of the rear surface of the support plate 7, and two right wires 18 and 19 (corresponding to a suspension mechanism) and two left wires 18 and 19 (corresponding to a suspension mechanism) extend from the lifting/lowering device 17. An outer support portion 21 is coupled to an upper portion of the support plate 7, and each of the support members 16 includes an outer support portion 16c (corresponding to a wire support portion). End portions of outer-wires 18b and 19b of the wires 18 and 19 are connected to the outer support portion 21 and the outer support portions 16c of the support members 16, and inner-wires 18a and 19a of the wires 18 and 19 are connected to the lifting/lowering device 17.

As shown in FIGS. 1, 2, 3, and 5, the inner-wires 18a and 19a of the two right wires 18 and 19 are wrapped around the right pulley 15 and then extend downward, and the right hand portion 20 is connected to extension ends of the inner-wires 18a and 19a of the two right wires 18 and 19.

The inner-wires 18a and 19a of the two left wires 18 and 19 are wrapped around the left pulley 15 and then extend downward, and the left hand portion 20 is connected to extension ends of the inner-wires 18a and 19a of the two left wires 18 and 19.

### Hand portions

As shown in FIGS. 1 and 2, the right and left hand portions 20 are each constituted by a folded plate with a hook shape, and are bilaterally symmetrical. The right hand portion 20 includes a raising operation switch 23, and the left hand portion 20 includes a lowering operation switch 24.

As shown in FIGS. 1, 2, and 3, harnesses 14, which are connected to the control device 8, enter the right and left arm portions 2 through vertically intermediate portions thereof, pass through the arm portions 2, and extend to the extension end portions 2a (see FIG. 5) of the arm portions 2. The harnesses 14 exit and extend downward from opening portions in the extension end portions 2a of the right and left arm portions 2, and the harnesses 14 are connected to the raising operation switch 23 and the lowering operation switch 24.

As shown in FIGS. 1 and 2, while the worker is wearing the assist device, the worker grips the right hand portion 20 using his right hand, and grips the left hand portion 20 using his left hand. In this state, the worker operates the raising operation switch 23 and the lowering operation switch 24 by pressing the raising operation switch 23 and the lowering operation switch 24 using his thumbs on his right and left hands, respectively.

As shown in FIGS. 1 and 2, the raising operation switch 23 and the lowering operation switch 24 are of a restoring type. When the worker is pressing the raising operation switch 23 and the lowering operation switch 24, operation signals are output from the raising operation switch 23 and the lowering operation switch 24. Similarly, if the worker stops operating the raising operation switch 23 and the lowering operation switch 24, operation signals from the raising operation switch 23 and the lowering operation switch 24 are stopped.

### Lifting/lowering device

As shown in FIGS. 1 and 2, the lifting/lowering device 17 is coupled to the support plate 7. The lifting/lowering device 17 includes a vertically oriented transmission case 25 that houses a transmission mechanism (not shown), a support case 26 that is horizontally coupled to an upper portion of the transmission case 25, an electrical motor 27 that is horizontally coupled to a lower portion of the transmission case 25, and four rotating bodies (not shown) that can rotate about a horizontal axis inside the support case 26.

As shown in FIGS. 1 and 2, end portions of the outer-wires 18b and 19b of the right and left wires 18 and 19 are connected to the outer support portion 21, and the inner-wires 18a and 19a of the wires 18 and 19 are respectively connected to the four rotating bodies inside the support case 26.

According to the above structure, the electrical motor 27 operates in accordance with the control device 8 as shown in FIGS. 1 and 2. Drive power from the electrical motor 27 is transmitted to the rotating bodies inside the support case 26 via the transmission mechanism inside the transmission case 25, and the rotating bodies are thus driven to rotate in the winding direction and the unwinding direction.

As shown in FIGS. 1, 2, and 3, if the raising operation switch 23 is pressed, the rotating bodies are driven to rotate in the winding direction by the electrical motor 27, the inner-wires 18a and 19a of the wires 18 and 19 are wound by the rotating bodies, and the hand portions 20 rise.

If the lowering operation switch 24 is pressed, the rotating bodies are driven to rotate in the unwinding direction by the electrical motor 27, the inner-wires 18a and 19a of the wires 18 and 19 are unwound from the rotating bodies, and the hand portions 20 descend.

If operation of the raising operation switch 23 and the lowering operation switch 24 is stopped, the electrical motor 27 stops. The electrical motor 27 includes an electromagnetic brake (not shown), the electromagnetic brake is automatically disengaged when the electrical motor 27 operates, and the electromagnetic brake automatically engages when the electrical motor 27 is stopped or not receiving power.

### Configuration of support members at extension end portions of arm portions

As shown in FIGS. 4, 5, and 6, the right and left support members 16 are supported at the extension end portions 2a of the right and left arm portions 2.

As shown in FIGS. 4 and 5, each of the support members 16 include a support portion 16a, which is open on its lower side and is semicircular in a side view, a cylindrical attachment portion 16b, the outer support portion 16c, an opening portion 16d, and a nut support portion 16e, and these portions are integrally formed.

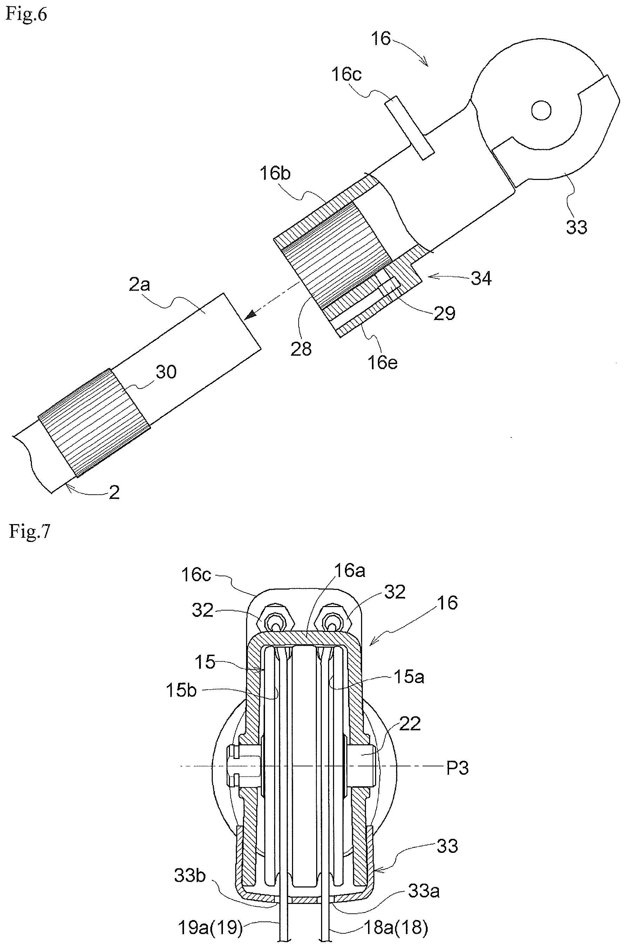

As shown in FIGS. 5 and 6, a spline portion 28 with splines formed on the inner surface of a cylindrical member thereof is provided, and the spline portion 28 is attached to the inner surface of the attachment portion 16b of each of the support members 16. A nut 29 is inserted from an opening portion at an end portion of the nut support portion 16e of each of the support members 16, and the nut 29 is attached to the inside of the nut support portion 16e of each of the support members 16.

As shown in FIGS. 5 and 6, a spline portion 30 with splines formed on the outer surface of a cylindrical member thereof is provided, and the spline portion 30 is attached to a slightly rear (lower) portion of the extension end portion 2a of each of the right and left arm portions 2.

As shown in FIGS. 4, 5, and 6, the extension end portion 2a of each of the arm portions 2 is inserted into the attachment portion 16b of the corresponding support member 16 from the direction of an extension axis P2, which is parallel to the direction in which the extension end portion 2a of the arm portion 2 extends, and the attachment portion 16b of the support member 16 is fitted to the extension end portion 2a of the arm portion 2.

As shown in FIGS. 5 and 6, in a state before the spline portion 30 of the arm portion 2 and the spline portion 28 of the support member 16 are fitted to each other, the orientation of the support member 16 is changed about the extension axis P2 by rotating the support member 16 about the extension axis P2.

As shown in FIGS. 4, 5, and 6, the extension end portion 2a of the arm portion 2 is further inserted into the attachment portion 16b of the support portion 16, and the spline portion 30 of the arm portion 2 and the spline portion 28 of the support member 16 are fitted to each other, and thus, the orientation of the support member 16 about the extension axis P2 is determined.

As shown in FIGS. 4 and 5, a bolt 31 (corresponding to a withdrawal prevention member) is inserted into the nut 29 from the opening portion in the nut support portion 16e of each of the support members 16, and is pressed against the spline portion 28 of the corresponding arm portion 2 from the opening portion in the attachment portion 16b (spline portion 30) of the support member 16, and then the bolt 31 is fastened, thereby preventing the support member 16 from withdrawing from the extension end portion 2a of the arm portion 2.

As described above, a fixing portion 34 for fixing each of the support members 16 at a predetermined position (predetermined orientation) about the extension axis P2 is provided between the arm portion 2 and the support member 16. As shown in FIGS. 4, 5, and 6, the fixing portion 34 includes the spline portion 30 of the arm portion 2, the spline portion 28 of the support member 16, the bolt 31, the nut 29, and so on.

### Pulleys supported by support members

As shown in FIGS. 4, 5, and 7, a support shaft 22 is horizontally supported by the support portion 16a of each of the support members 16 so as to intersect (be perpendicular to) the extension axis P2, and the pulley 15 is supported so as to be capable of freely rotating about a rotation axis P3 (corresponding to a lateral axis) of the support shaft 22.

As shown in FIGS. 4, 5, and 7, the pulley 15 is formed to be wide, two groove portions 15a and 15b are formed in the circumferential direction in the outer circumferential portion of the pulley 15, and the groove portions 15a and 15b are arranged side-by-side in the direction of the rotation axis P3.

As shown in FIGS. 1, 2, and 3, the right wires 18 and 19 extend along the right arm portion 2, and, as shown in FIGS. 5 and 7, end portions of the outer-wires 18b and 19b of the right wires 18 and 19 are connected to the outer support portion 16c of the corresponding support member 16 by nuts 32. Thus, the outer support portion 16c of the support member 16 is provided at a portion of the support member 16 on the lifting/lowering device 17 side relative to the pulley 15.

As shown in FIGS. 5 and 7, the inner-wires 18a and 19a of the right wires 18 and 19 enter the support portion 16a of the corresponding support member 16 through the opening portion 16d of the support member 16.

The inner-wire 18a of the right wire 18 enters the groove portion 15a of the pulley 15, the inner-wire 19a of the right wire 19 enters the groove portion 15b of the pulley 15, and the inner-wires 18a and 19a of the right wires 18 and 19 are wrapped around the pulley 15 and extend downward.

Similarly to the right wires 18 and 19, the left wires 18 and 19 are also attached to the left arm portion 2, support member 16, and pulley 15, and extend downward.

### Guide portions attached to support members

As shown in FIGS. 4, 5, 6, and 7, right and left guide portions 33 are attached to lower portions of the support portions 16a of the right and left support members 16. The upper side of each of the pulleys 15 is covered by the support portions 16a of the support members 16, the lower side of each of the pulleys 15 is covered by the guide portions 33, and the entire pulleys 15 are in a state of being covered by the support portions 16a of the support members 16 and the guide portions 33.

As shown in FIGS. 4, 5, and 7, the guide portions 33 are formed in an arc shape in a side view, extending along the lower portions of the support portions 16a of the support members 16 and the outer circumferential portions of the pulleys 15. Two elongated holes 33a and 33b are open in each of the guide portions 33.

As shown in FIGS. 5 and 7, in a state where each of the guide portions 33 is attached to the lower portion of the corresponding support portion 16a of the support member 16, the elongated hole 33a in the guide portion 33 is located opposing the lower side of the groove portion 15a of the pulley 15, and the elongated hole 33b in the guide portion 33 is located opposing the lower side of the groove portion 15b of the pulley 15.

As shown in FIGS. 5 and 7, the elongated holes 33a and 33b in each of the guide portions 33 are provided in the guide portions 33 so as to be arranged side-by-side in the direction of the rotation axis P3, and are in a state of being arranged in the circumferential direction of the pulley 15 (the groove portions 15a and 15b of the pulley 15).

In the right and left guide portions 33, the inner-wires 18a of the wires 18 pass through the elongated holes 33a in the guide portions 33, and the inner-wires 19a of the wires 19 pass through the elongated holes 33b in the guide portions 33.

### Holding of package by hand portions

It is assumed that, in the case of holding a package B with the right and left hand portions 20 by holding a right portion of the package B with the right hand portion 20 and holding a left portion of the package B with the left hand portion 20, the width W2 of the package B is larger than the space W1 in the left-right direction between the right and left support members 16 (pulleys 15) as shown in FIG. 8.

In the state shown in FIG. 8, the orientation of the right and left support members 16 (pulleys 15) can be changed about the extension axis P2 and fixed such that the inner-wires 18a and 19a of the wires 18 and 19 extend diagonally outward to the right and left sides from the pulleys 15 in the right and left support members 16.

As shown in FIG. 9, in a state where the width W2 of the package B is smaller than the space W1 in the left-right direction between the right and left support members 16 (pulleys 15), the orientation of the right and left support members 16 (pulleys 15) can be changed about the extension axis P2 and fixed such that the inner-wires 18a and 19a of the wires 18 and 19 extend diagonally inward to the right and left sides from the pulleys 15 in the right and left support members 16.

Thus, as shown in FIGS. 8 and 9, the inner-wires 18a and 19a of the right and left wires 18 and 19 can be brought close to a state of extending from the right and left pulleys 15 in the rotational directions (directions perpendicular to the rotation axes P3) of the right and left pulleys 15.

In the states shown in FIGS. 8 and 9, if the inner-wires 18a and 19a of the right and left wires 18 and 19 are wound and unwound by the electrical motor 27, and the right and left hand portions 20 are raised and lowered as mentioned in the previous section about the lifting/lowering device, the inner-wires 18a and 19a of the right and left wires 18 and 19 are wound and unwound substantially in a state where the inner-wires 18a and 19a of the right and left wires 18 and 19 extend from the pulleys 15 in the rotational directions (directions perpendicular to the rotation axes P3) of the right and left pulleys 15.

### Operation of assist device

In the case where a package B placed on a pallet or the floor is to be placed on a high shelf or truck bed for example, it is envisioned that the worker squats and places their hands on the package B on the pallet or floor, then rises while holding the package B with their hands stretched downward, then lifts the package B up, and places it on the high shelf or truck bed.

The following describes the operation of the right and left leg action portions 3 and the lifting/lowering device 17 under control of the control device 8 based on operations of the raising operation switch 23 and the lowering operation switch 24 in the state where a worker wearing the assist device performs the above-described operation.

As shown in FIGS. 1 and 2, when the assist device is worn by the worker, if at least one of the raising operation switch 23 and the lowering operation switch 24 is not pressed by the worker, the electrical motor 27 of the lifting/lowering device 17 is stopped, and the electrical motors of the right and left leg action portions 3 are in the stopped state (free rotation state).

When the worker walks or bends their knees to lower their waist portion (squats), the operation arms 12 swing to follow the thigh portions of the worker, and the movement of the worker is not hindered.

In the case where the worker squats and grabs the package B on the pallet or floor, if the worker then presses the lowering operation switch 24, the electrical motor 27 of the lifting/lowering device 17 operates in the unwinding direction, the inner-wires 18a and 19a of the wires 18 and 19 are unwound, and the hand portions 20 descend. When the operation of the lowering operation switch 24 is stopped, the electrical motor 27 stops, the hand portions 20 stop, and the worker then holds the package B with the hand portions 20.

As mentioned in the previous section about the lifting/lowering device, an electromagnetic brake (not shown) is provided in the electrical motor 27, and the electromagnetic brake automatically engages when the electrical motor 27 is stopped or not receiving power.

While the electrical motor 27 is stopped, the inner-wires 18a and 19a of the wires 18 and 19 are not unwound from the lifting/lowering device 17, and the hand portions 20 do not descend even if the weight of the package B is applied to the hand portions 20 as will be described later.

Next, while holding the package B with the hand portions 20, the worker lifts the package B by standing up. If the worker operates the raising operation switch 23, the operation arms 12 of the leg action portions 3 are driven downward, and the thigh portions of the worker are moved downward, thus assisting the standing-up of the worker. When the worker stands up, the hand portions 20 do not descend due to the braking function of the electrical motor 27.

After the worker has stood up while pressing the raising operation switch 23, if it is detected that the operation arms 12 of the leg action portions 3 have reached a position of facing substantially straight downward, it is determined that the worker has completely stood up, and the electrical motor of the leg action portions 3 is put in the stopped state (free rotation state).

Next, the electrical motor 27 of the lifting/lowering device 17 operates in the winding direction, the inner-wires 18a and 19a of the wires 18 and 19 are wound, and the hand portions 20 rise. When the hand portions 20 have risen to a desired position, by stopping the operation of the raising operation switch 23, the electrical motor 27 stops, and the hand portions 20 stop.

Next, the worker walks to the high shelf, the truck bed, or the like on which the package B is to be placed. When the worker arrives at the high shelf, the truck bed, or the like, and then presses the lowering operation switch 24, the electrical motor 27 of the lifting/lowering device 17 operates in the unwinding direction, the inner-wires 18a and 19a of the wires 18 and 19 are unwound, and the hand portions 20 descend.

The worker places the package B on the high shelf, the truck bed, or the like, and detaches the hand portions 20 from the package B. When the package B is placed on the high shelf, the truck bed, or the like, the initial state is returned to, and similar operations are performed with respect to the next package B.

### Embodiment 2

Next, another configuration of the support members at the arm portions will be described as Embodiment 2.

### Configuration of support members at extension end portions of arm portions

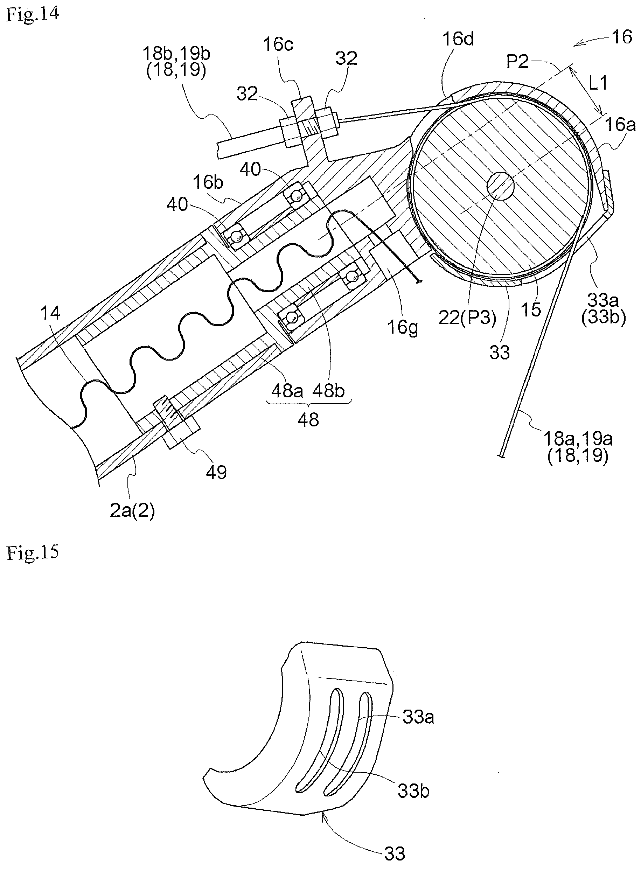

As shown in FIG. 14, the right and left support members 16 are supported at the extension end portions 2a of the right and left arm portions 2.

As shown in FIG. 14, a shaft member 48 is inserted into and coupled to the extension end portion 2a of each of the arm portions 2. The shaft member 48 includes a cylindrical large-diameter portion 48a and a cylindrical small-diameter portion 48b, and the large-diameter portion 48a of the shaft member 48 is inserted into the extension end portion 2a of the arm portion 2 and coupled thereto by a bolt 49.

As shown in FIGS. 14 and 7, each of the support members 16 includes a support portion 16a, which is open on its lower side and is semicircular in a side view, a cylindrical attachment portion 16b, an outer support portion 16c, an opening portion 16d, and a passage 16g, which is continuous with the attachment portion 16b, and these portions are integrally formed.

As shown in FIG. 14, the small-diameter portion 48b of the shaft member 48 is inserted into the attachment portion 16b of the support member 16, and the attachment portion 16b of the support member 16 is supported by the small-diameter portion 48b of the shaft member 48 so as to be capable of rotating via a bearing 40. Accordingly, the support member 16 can freely change its orientation about the extension axis P2, which is parallel to the direction in which the extension end portion 2a of the arm portion 2 extends.

As described in the description of the hand portions in Embodiment 1, the harnesses 14 extend from the control device 8, enter the arm portions 2, pass through the arm portions 2, and then extend to the extension end portions 2a of the arm portions 2. As shown in FIG. 14, the harnesses 14 pass through the large-diameter portions 48a and the small-diameter portions 48b of the shaft members 48, pass through the passages 16g of the support members 16, and extend downward from the support members 16, and the harnesses 14 are connected to the raising operation switch 23 and the lowering operation switch 24.

### Pulleys supported by support members

As shown in FIGS. 14 and 7, the support shaft 22 is horizontally supported by the support portion 16a in each of the support members 16 so as to intersect (be perpendicular to) the extension axis P2, and the pulley 15 is supported so as to be capable of freely rotating about a rotation axis P3 (corresponding to a lateral axis) of the support shaft 22. In this case, the rotation axis P3 is arranged below the extension axis P2, and the length between the extension axis P2 and the extension axis P3 is denoted as L1.

As shown in FIGS. 14 and 7, the pulley 15 is formed to be wide, two groove portions 15a and 15b are formed in the circumferential direction in the outer circumferential portion of the pulley 15, and the groove portions 15a and 15b are arranged side-by-side in the direction of the rotation axis P3.

As shown in FIGS. 1, 2 and 3, the right wires 18 and 19 extend along the right arm portion 2 and, as shown in FIGS. 14 and 7, end portions of the outer-wires 18b and 19b of the right wires 18 and 19 are connected to the outer support portion 16c of the support member 16 by the nut 32. Thus, the outer support portion 16c of the support member 16 is provided at a portion of the support member 16 on the lifting/lowering device 17 side relative to the pulley 15.

As shown in FIGS. 14 and 7, the inner-wires 18a and 19a of the right wires 18 and 19 enter the support portion 16a of the support member 16 through the opening portion 16d of the support member 16.

The inner-wire 18a of the right wire 18 enters the groove portion 15a of the pulley 15, the inner-wire 19a of the right wire 19 enters the groove portion 15b of the pulley 15, and the inner-wires 18a and 19a of the right wires 18 and 19 are wrapped around the pulley 15 and extend downward.

Similarly to the right wires 18 and 19, the left wires 18 and 19 are also attached to the left arm portion 2, support member 16, and pulley 15, and extend downward.

### Guide portions attached to support members

As shown in FIGS. 14, 7, and 15, right and left guide portions 33 are attached to lower portions of the support portions 16a of the right and left support members 16. The upper side of each of the pulleys 15 is covered by the support portions 16a of the support members 16, the lower side of each of the pulleys 15 is covered by the guide portions 33, and the entire pulleys 15 are in a state of being covered by the support portions 16a of the support members 16 and the guide portions 33.

As shown in FIGS. 14, 7, and 15, the guide portions 33 are formed in an arc shape in a side view, along the lower portions of the support portions 16a of the support members 16 and the outer circumferential portions of the pulleys 15. Two elongated holes 33a and 33b are open in each of the guide portions 33.

As shown in FIGS. 14 and 7, in a state where each of the guide portions 33 is attached to the lower portion of the support portion 16a of the corresponding support member 16, the elongated hole 33a in the guide portion 33 is located opposing the lower side of the groove portion 15a of the pulley 15, and the elongated hole 33b in the guide portion 33 is located opposing the lower side of the groove portion 15b of the pulley 15.

As shown in FIGS. 14 and 7, the elongated holes 33a and 33b in each of the guide portions 33 are provided in the guide portions 33 so as to be arranged side-by-side in the direction of the rotation axis P3, and are in a state of being arranged in the circumferential direction of the pulley 15 (the groove portions 15a and 15b of the pulley 15).

In the right and left guide portions 33, the inner-wires 18a of the wires 18 pass through the elongated holes 33a in the guide portions 33, and the inner-wires 19a of the wires 19 pass through the elongated holes 33b in the guide portions 33.

### Holding of package by hand portions

It is assumed that, in the case of holding a package B with the right and left hand portions 20 by holding a right portion of the package B with the right hand portion 20 and holding a left portion of the package B with the left hand portion 20, a package B with a larger width W2 than the space W1 in the left-right direction of the right and left support members 16 (pulleys 15) and a package B with a smaller width W2 than the space W1 are present, as shown in FIGS. 8 and 9.

As shown in FIG. 8, in the case of a package B with a large width W2, the worker wearing the assist device moves the right and left hand portions 20 outward to the right and left sides in accordance with the width W2 of the package B, holds the right portion of the package B with the right hand portion 20, and holds the left portion of the package B with the left hand portion 20.

As shown in FIG. 9, in the case of a package B with a small width W2, the worker wearing the assist device moves the right and left hand portions 20 inward to the right and left sides in accordance with the width W2 of the package B, holds the right portion of the package B with the right hand portion 20, and holds the left portion of the package B with the left hand portion 20.

As shown in FIGS. 8 and 9, if the right and left hand portions 20 are moved outward (inward) to the right and left sides, the inner-wires 18a and 19a of the right and left wires 18 and 19 accordingly move outward (inward) to the right and left sides and extend diagonally outward (inward) to the right and left sides.

Thus, as shown in FIGS. 8 and 9, a change in the orientation of the inner-wires 18a and 19a of the right and left wires 18 and 19 is transmitted to the right and left pulleys 15, and a relatively large moment is generated based on the length L1 (see FIG. 14) between the extension axis P2 and the rotation axis P3.

This moment changes the orientation of the right and left support members 16 (pulleys 15) diagonally outward (inward) to the right and left sides so as to follow the inner-wires 18a and 19a of the right and left wires 18 and 19.

In the states shown in FIGS. 8 and 9, if the inner-wires 18a and 19a of the right and left wires 18 and 19 are wound and unwound by the electrical motor 27, and the right and left hand portions 20 are raised and lowered as mentioned in the previous section about the lifting/lowering device, the inner-wires 18a and 19a of the right and left wires 18 and 19 are wound and unwound in a state where the inner-wires 18a and 19a of the right and left wires 18 and 19 extend from the pulleys 15 in the rotational directions (directions perpendicular to the rotation axes P3) of the right and left pulleys 15.

As shown in FIGS. 8 and 9, if, in a state where a package B is held by the right and left hand portions 20, the right and left hand portions 20 are raised and lowered as mentioned above, the inner-wires 18a and 19a of the right and left wires 18 and 19 accordingly move slightly outward (inward) to the right and left sides.

In this state as well, the orientation of the right and left support members 16 (pulleys 15) changes diagonally outward (inward) to the right and left sides so as to follow the inner-wires 18a and 19a of the right and left wire 18 and 19, as described above.

As described above, the inner-wires 18a and 19a of the right and left wires 18 and 19 are wound and unwound in a state where the inner-wires 18a and 19a of the right and left wires 18 and 19 extend from the pulleys 15 in the rotational directions (directions perpendicular to the rotation axes P3) of the right and left pulleys 15, in accordance with a change in the width W2 of packages B and the raising and lowering of the right and left hand portions.

### Embodiment 3

Embodiments 1 and 2 described above may also employ hand portions that are configured as will be described below.

Another configuration of the hand portions will be described below as Embodiment 3.

### Overall configuration of hand portions

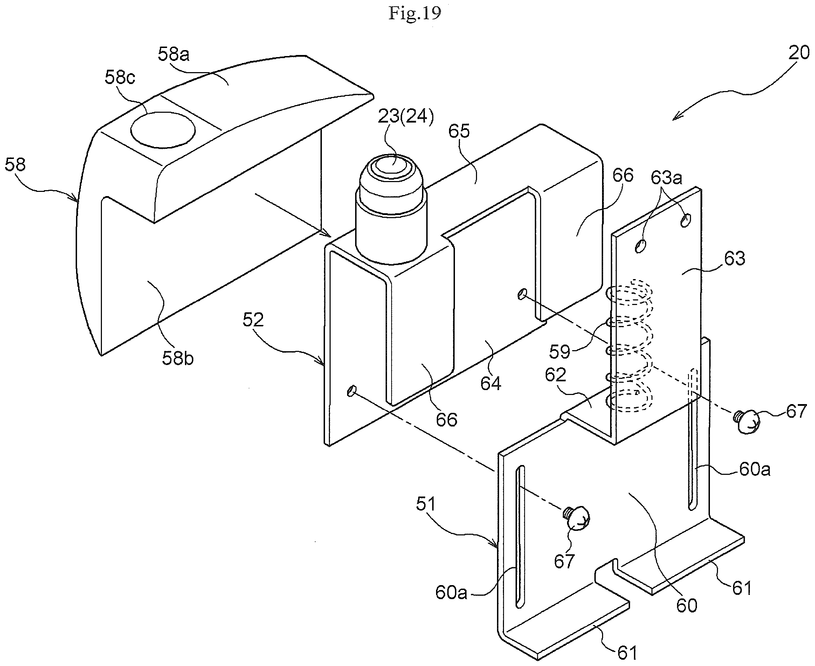

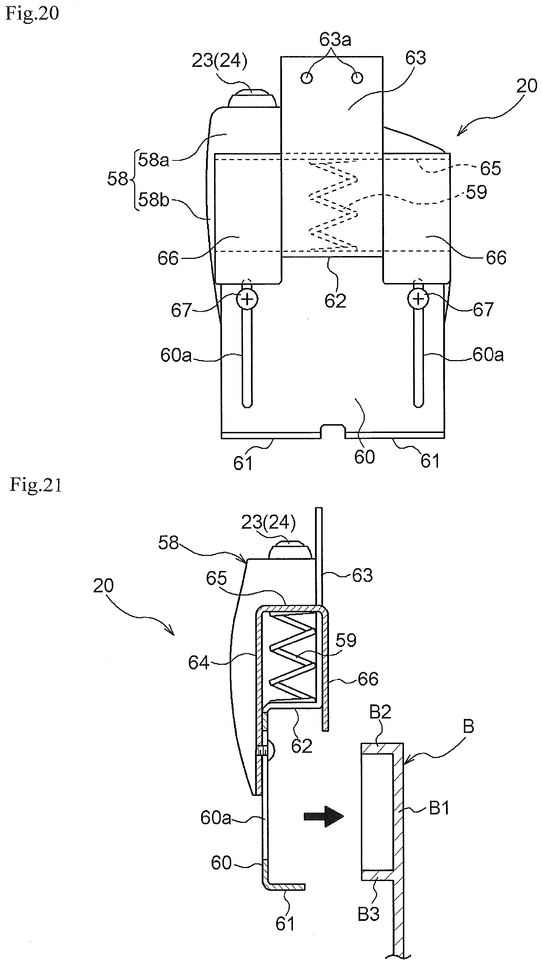

FIGS. 19 and 20 show an entire right hand portion 20, and the right and left hand portions 20 are bilaterally symmetrical as shown in FIGS. 1 and 2.

As shown in FIGS. 19 and 20, each of the hand portions 20 includes a first member 51, a second member 52, a cover 58, a raising operation switch 23 (corresponding to a manual lifting/lowering operation portion) (lowering operation switch 24 (corresponding to a manual lifting/lowering operation portion), a spring 59 (corresponding to a biasing portion), and so on.

As shown in FIGS. 1 and 2, in the right hand portion 20, the inner-wires 18a and 19a of the right wires 18 and 19 are connected to the first member 51, and the raising operation switch 23 is attached to the second member 52.

In the left hand portion 20, the inner-wires 18a and 19a of the left wires 18 and 19 are connected to the first member 51, and the lowering operation switch 24 is attached to the second member 52.

As shown in FIGS. 1, 2, and 3, the right and left harnesses 14, which are connected to the control device 8, enter the right and left arm portions 2, pass through the arm portions 2, and extend to upper end portions of the arm portions 2. The harnesses 14 exit and extend downward from opening portions at the upper end portions of the right and left arm portions 2, the right harness 14 is connected to the raising operation switch 23, and the left harness 14 is connected to the lowering operation switch 24.

As shown in FIGS. 1 and 2, if the raising operation switch 23 is pressed, the rotating bodies are driven to rotate in the winding direction by the electrical motor 27 in the lifting/lowering device 17, the inner-wires 18a and 19a of the wires 18 and 19 are wound by the rotating bodies, and the hand portions 20 rise.

If the lowering operation switch 24 is pressed, the rotating bodies are driven to rotate in the unwinding direction by the electrical motor 27, the inner-wires 18a and 19a of the wires 18 and 19 are unwound from the rotating bodies, and the hand portions 20 descend.

If operation of the raising operation switch 23 and the lowering operation switch 24 is stopped, the electrical motor 27 stops. The electrical motor 27 includes an electromagnetic brake (not shown), the electromagnetic brake is automatically disengaged when the electrical motor 27 operates, and the electromagnetic brake automatically engages when the electrical motor 27 is stopped or not receiving power.

### Specific structure of hand portions

As shown in FIGS. 19 and 20, the first member 51 and the second member 52 of each of the hand portions 20 are constituted by folded metal plates.

As shown in FIGS. 19 and 20, the first member 51 includes a vertically oriented lateral portion 60, a lower portion 61 that extends horizontally (toward a side wall portion B1 (see FIG. 21) side of a package B) from a lower portion of the lateral portion 60, an upper portion 62 that extends horizontally (toward the side wall portion B1 (see FIG. 21) side of the package B) from the center of an upper portion of the lateral portion 60, and a connection portion 63 that extends upward from an end portion of the upper portion 62.

As shown in FIGS. 19 and 20, two elongated holes 60a are open in the vertical direction in the lateral portion 60. Connection holes 63a are open in an upper portion of the connection portion 63, and the inner-wires 18a and 19a of the wires 18 and 19 are connected to the connection holes 63a in the connection portion 63.

As shown in FIGS. 19 and 20, the second member 52 includes a vertically oriented movement support portion 64, a manual operation portion 65 that extends horizontally (toward the side wall portion B1 (see FIG. 21) side of the package B) from an upper portion of the movement support portion 64, and two inner portions 66 that extend downward from end portions of the manual operation portion 65. The raising operation switch 23 (lowering operation switch 24) is attached to the manual operation portion 65.

As shown in FIGS. 19 and 20, the movement support portion 64 is brought into contact with the lateral portion 60 such that the connection portion 63 is located between the inner portions 66, and screws 67 pass through the elongated holes 60a in the lateral portion 60 and are connected to the movement support portion 64.

As shown in FIGS. 19 and 20, with the elongated holes 60a in the lateral portion 60 and the movement support portion 64, the manual operation portion 65 and the inner portions 66 are supported so as to be capable of sliding along the elongated holes 60a in the lateral portion 60, and are supported so as to be capable of moving in an approaching direction of moving downward to approach the lower portion 61 and in a separating direction of moving upward away from the lower portion 61.

A spring 59 is attached between the upper portion 62 and the manual operation portion 65, and the manual operation portion 65 and the inner portions 66 are biased in the separating direction by the spring 59.

As shown in FIGS. 19 and 20, the cover 58 is integrally formed with synthetic resin, and includes an upper portion 58a, a lateral portion 58b, and an opening portion 58c that is open in the upper portion 58a.

The upper portion 58a of the cover 58 is attached to the manual operation portion 65, the raising operation switch 23 (lowering operation switch 24) protrudes upward from the opening portion 58c in the cover 58, and the lateral portion 58b of the cover 58 is attached to the movement support portion 64.

### Operation to hold package with hand portions

As shown in FIG. 21, if, for example, a case-like package B for containing beverages such as beer, or fruit such as apples or oranges is to be held by the hand portions 20, the following state of the package B is envisioned.

As shown in FIG. 21, the side wall portion B1 of the package B is provided with an upper protruding portion B2 and a lower protruding portion B3, and no opening portion that penetrates the side wall portion B1 of the package B is provided. The protruding portions B2 and B3 of the package B have a flat plate shape that horizontally protrudes, and spans over the enter circumference of an upper portion of the package B, including the side wall portion B1 of the package B.

In the case of the package B shown in FIG. 21, if the hand portion 20 is to be attached to the side wall portion B1 of the package B in order to hold the package B with the hand portion 20, the manual operation portion 65 and the inner portions 66 are operated in the upward separating direction by the spring 59, such that the lower portion 61 and the inner portions 66 are largely separated from each other, and thus, in this state, the side wall portion B1 (protruding portions B2 and B3) of the package B is inserted between the lower portion 61 and the inner portions 66.

Thus, as shown in FIG. 21, the lateral portion 60 is arranged in the vertical direction along an outer side of the side wall portion B1 of the package B, the lower portion 61 is brought toward the lower side of the side wall portion B1 (protruding portion B3) of the package B, and the upper portion 62 is arranged above the side wall portion B1 (protruding portion B2) of the package B.

As shown in FIGS. 20, 21, and 22, the upper portion 58a of the cover 58 is pressed downward, and the manual operation portion 65 is pressed downward via the upper portion 58a of the cover 58.

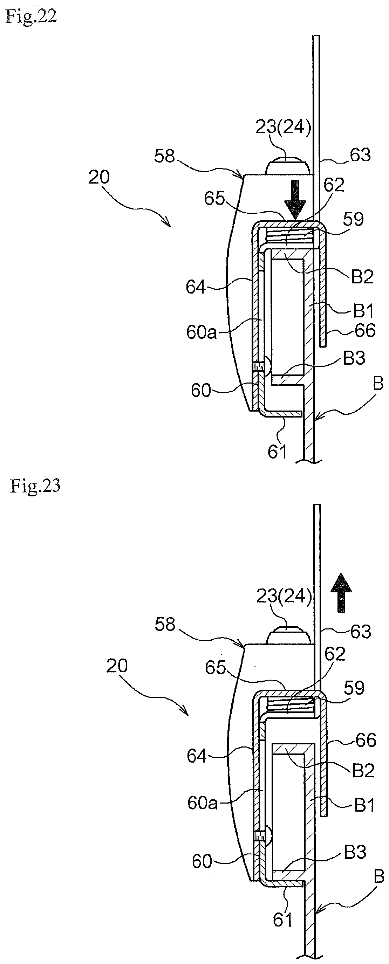

As shown in FIG. 22, the lower portion 61 is slightly separated downward from the side wall portion B1 (protruding portion B3) of the package B, and the upper portion 62 comes into contact with the upper side of the side wall portion B1 (protruding portion B2) of the package B. Also, the manual operation portion 65 and the inner portions 66 move in the downward approaching direction with the spring 59 being compressed, and the inner portions 66 are arranged in the vertical direction along an inner side of the side wall portion B1 of the package B.

In the state shown in FIG. 22, a thumb is placed on the upper portion 58a (see FIG. 19) of the cover 58, the index finger to the little finger are placed on the lower surface of the lower portion 61, and the hand portion 20 is held in a grasping manner. A state where the manual operation portion 65 and the inner portions 66 are operated in the downward approaching direction is maintained such that the manual operation portion 65 and the inner portions 66 are not operated in the upward separating direction by the spring 59.

If, in a state where the hand portion 20 is held, the raising operation switch 23 is pressed as described in the previous description about the overall configuration of hand portions, the hand portion 20 rises, the lower portion 61 comes into contact with the side wall portion B1 (protruding portion B3) of the package B as shown in FIG. 23, and the weight of the package B is supported by the lower portion 61.

Even if the hand portion 20 begins to come off of the side wall portion B1 of the package B in the state shown in FIG. 23, a state where the hand portion 20 begins to come off of the side wall portion B1 of the package B is suppressed as a result of the inner portions 66 abutting against the inner side of the side wall portion B1 of the package B.

Even if the side wall portion B1 (protruding portion B3) of the package B begins to move upward away from the lower portion 61 due to shaking or the like of the package B or the hand portion 20, the side wall portion B1 of the package B is restrained from moving upward as a result of the side wall portion B1 (protruding portion B2) of the package B abutting against the upper portion 62.

When the hand portion 20 is to be removed from the side wall portion B1 of the package B, if the state where the hand portion 20 is held in a grasping manner is canceled, the manual operation portion 65 and the inner portions 66 are operated in the upward separating direction by the spring 59 as shown in FIG. 21, and thus the hand portion 20 can be removed from the side wall portion B1 of the package B.

### First variation of Embodiment 1

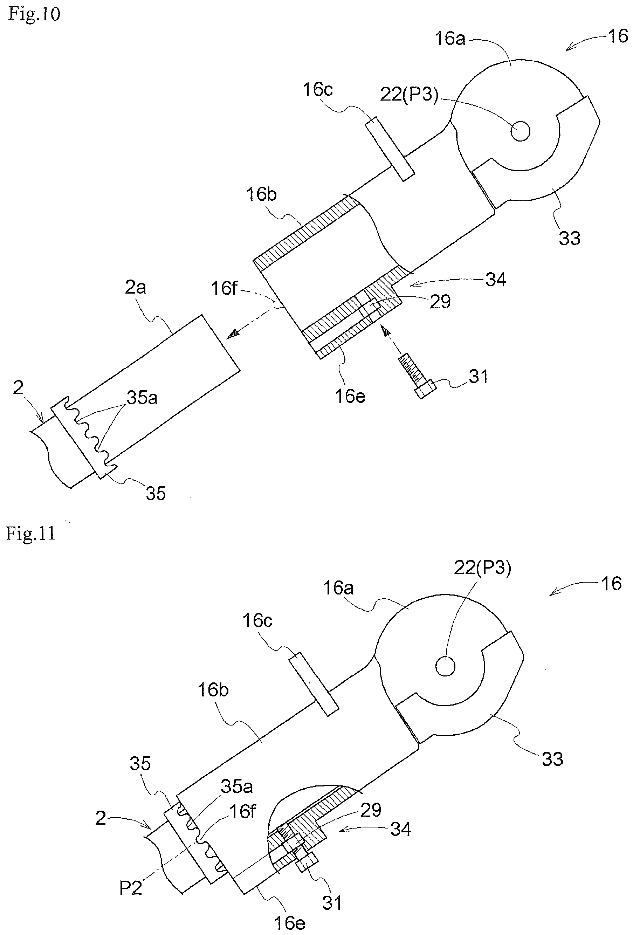

A fixing portion 34 shown in FIGS. 10 and 11 may alternatively be provided in place of the fixing portion 34 in Embodiment 1.

The spline portion 30 of each of the arm portions 2 and the spline portion 28 of each of the support members 16 shown in FIGS. 5 and 6 are not provided, whereas a protruding engaging portion 16f is provided at an end portion of the attachment portion 16b of each of the support members 16.

A ring-shaped engaged member 35 is attached to the extension end portion 2a of each of the arm portions 2, and the engaged member 35 is provided with a plurality of recessed engaged portions 35a that are arranged in the circumferential direction. The nut support portion 16e of each of the support members 16, the nut 29, and the bolt 31 shown in FIGS. 5 and 6 are provided.

The extension end portion 2a of each of the arm portions 2 is inserted into the attachment portion 16b of the corresponding support member 16 from the direction of the extension axis P2 that is parallel to the direction in which the extension end portion 2a of the arm portion 2 extends, and the attachment portion 16b of the support member 16 is fitted to the extension end portion 2a of the arm portion 2.

The orientation of the support member 16 is changed about the extension axis P2 by rotating the support member 16 around the extension axis P2 in a state before the engaging portion 16f of the support member 16 is engaged with the engaged member 35.

The extension end portion 2a of the arm portion 2 is further inserted into the attachment portion 16b of the support member 16 to engage the engaging portion 16f of the support member 16 with the engaged portions 35a of the engaged member 35, and thus, the orientation of the support member 16 about the extension axis P2 is determined.

The bolt 31 is inserted into the nut 29 from the opening portion in the nut support portion 16e of the support member 16, and is then pressed against the outer surface of the extension end portion 2a of the arm portion 2 from the opening portion in the attachment portion 16b of the support member 16, and the bolt 31 is fastened such that the support member 16 does not withdraw from the extension end portion 2a of the arm portion 2.

As described above, a fixing portion 34 for fixing each of the support members 16 at a predetermined position (predetermined orientation) about the extension axis P2 is provided between the arm portion 2 and the support member 16. The fixing portion 34 includes the engaged member 35 (engaged portions 35a) of the arm portion 2, the engaging portion 16f of the support member 16, the bolt 31, the nut 29, and so on.

In this case, the engaged member 35 (engaged portions 35a) may be attached to the attachment portion 16b of the support member 16 to attach the engaging portions 16f to the arm portion 2.

### Second variation of Embodiment 1

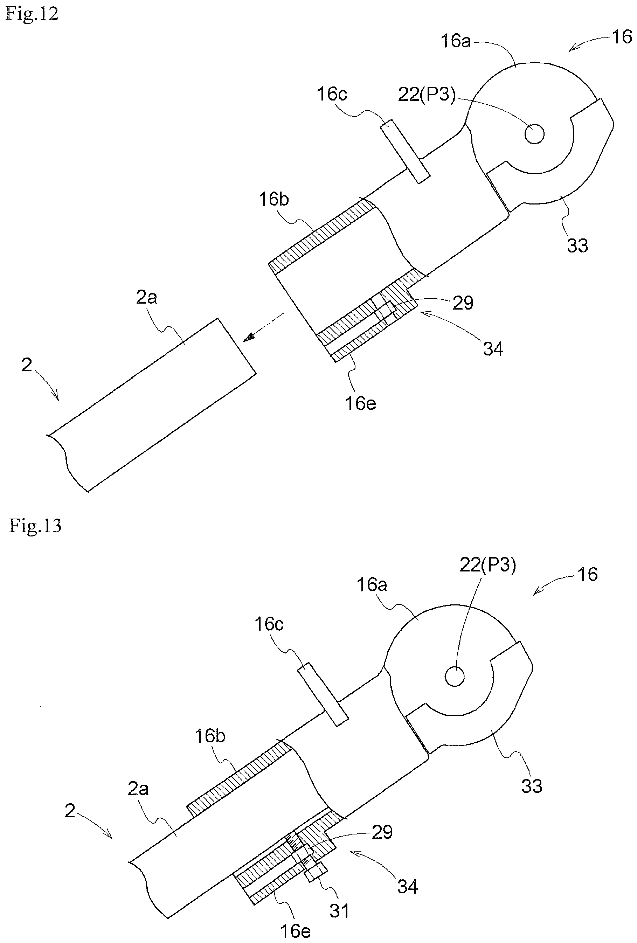

A fixing portion 34 shown in FIGS. 12 and 13 may be provided in place of the fixing portion 34 in Embodiment 1 and the first variation of Embodiment 1.

The spline portion 30 of each of the arm portions 2 and the spline portion 28 of the support member 16 shown in FIG. 5 are not provided, whereas the nut support portions 16e of the support member 16, the nut 29, and the bolt 31 shown in FIG. 5 are provided.

The extension end portion 2a of each of the arm portions 2 is inserted into the attachment portion 16b of the corresponding support member 16 from the direction of the extension axis P2 that is parallel to the direction in which the extension end portion 2a of the arm portion 2 extends, and the attachment portion 16b of the support member 16 is fitted to the extension end portion 2a of the arm portion 2.

The orientation of the support member 16 is changed about the extension axis P2 by rotating the support member 16 about the extension axis P2.

In a state where the orientation of the support member 16 about the extension axis P2 has been determined, the bolt 31 is inserted into the nut 29 from the opening portion in the nut support portion 16e of the support portion 16 and is pressed against the outer surface of the extension end portion 2a of the arm portion 2 from the opening portion in the attachment portion 16b of the support member 16, the bolt 31 is then fastened, and thus, the orientation of the support member 16 about the extension axis P2 is fixed such that the support member 16 does not withdraw from the extension end portion 2a of the arm portion 2.

As described above, a fixing portion 34 for fixing each of the support members 16 at a predetermined position (predetermined orientation) about the extension axis P2 is provided between the arm portion 2 and the support member 16. The fixing portion 34 includes the bolt 31, the nut 29, and so on.

### First variation of Embodiment 2

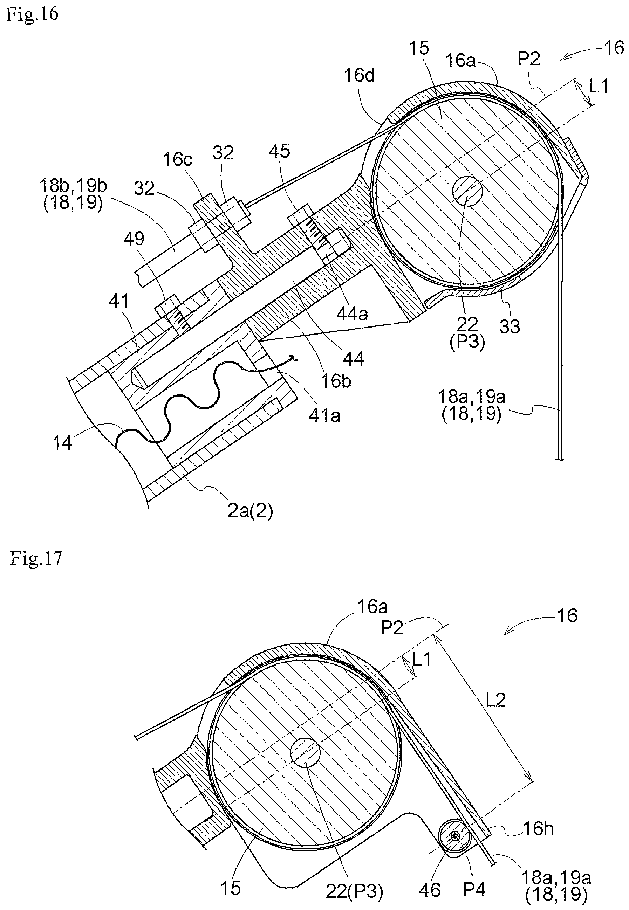

The support member 16 shown in FIG. 16 may be provided in place of the support member 16 described in Embodiment 2.

A cylindrical shaft member 41 is inserted into the extension end portion 2a of each of the arm portions 2, and a support shaft 44 is arranged in the direction in which the extension end portion 2a of the arm portion 2 extends, and is inserted into the shaft member 41. The shaft member 41 is coupled to the extension end portion 2a of the arm portion 2 of the shaft member 41 by the bolt 49, and the support shaft 44 is coupled to the shaft member 41.

The support member 16 includes a support portion 16a that is open on its lower side and is semicircular in a side view, an attachment portion 16b, an outer support portion 16c, and an opening portion 16d, similarly to the support member 16 shown in FIG. 14, and the attachment portion 16b has an elongated cylindrical shape with an inner diameter that is the same as the outer diameter of the support shaft 44.

The support shaft 44 is inserted into the attachment portion 16b of the support member 16, a screw 45 is attached to the attachment portion 16b of the support member 16, and the screw 45 enters a circumferential groove portion 44a at a leading end portion of the support shaft 44.

The attachment portion 16b of the support member 16 is supported by the support shaft 44 so as to be capable of freely rotating, and withdrawal of the support member 16 is prevented due to the screw 45 entering the groove portion 44a of the support shaft 44. Thus, the support member 16 can freely change its orientation about the extension axis P2 of the support shaft 44 that is parallel to the direction in which the extension end portion 2a of the arm portion 2 extends.

The harnesses 14 pass through the arm portions 2 and the shaft members 41 and extend downward from opening portions 41a in the shaft members 41, and the harnesses 14 are connected to the raising operation switch 23 and the lowering operation switch 24.

The support shaft 22 is horizontally supported by the support portion 16a of each of the support members 16 so as to intersect (be perpendicular to) the extension axis P2, and the pulley 15 is supported so as to be capable of freely rotating about the rotation axis P3 of the support shaft 22. In this case, the rotation axis P3 is arranged below the extension axis P2, and the length between the extension axis P2 and the extension axis P3 is denoted as L1. The guide portion 33 shown in FIGS. 14, 7, and 15 is attached to the support member 16.

### Second variation of Embodiment 2

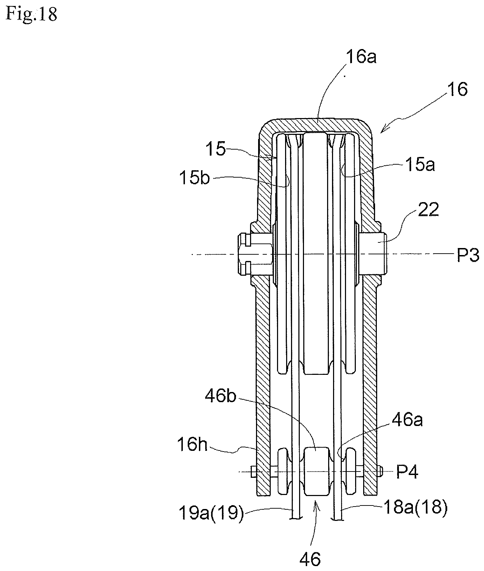

Right and left guide pulleys 46 (corresponding to guide portions) shown in FIGS. 17 and 18) may be provided in place of the guide portion 33 described in Embodiment 2 and the first variation of Embodiment 2.

An extending portion 16h that extends downward (toward the hand portion 20 side) from the support portion 16a of each of the support members 16 is provided, and the extending portion 16h is formed to have a channel-shaped cross section.

The guide pulley 46 is supported so as to be capable of freely rotating about a horizontal axis P4 (parallel to the rotation axis P3) of the extending portion 16h of the support member 16. In this case, the horizontal axis P4 is arranged below the rotation axis P3, and the length L2 between the extension axis P2 and the horizontal axis P4 is larger than the length L1 between the extension axis P2 and the rotation axis P3.

The guide pulley 46 is formed to be wide, two groove portions 46a and 46b are formed in the circumferential direction of an outer circumferential portion of the guide pulley 46, and the groove portions 46a and 46b are arranged side-by-side in the direction of the horizontal axis P4.

The inner-wires 18a and 19a of the right wires 18 and 19 extend downward from the right pulley 15. The inner-wire 18a of the right wire 18 enters the groove portion 46a of the right guide pulley 46, the inner-wire 19a of the right wire 19 enters the groove portion 46b of the right guide pulley 46, and the inner-wires 18a and 19a of the right wires 18 and 19 extend downward.

The left wires 18 and 19 also pass through the left guide pulley 46 and extend downward as described above.

As described in Embodiment 2 with reference to FIGS. 8 and 9, if the right and left hand portions 20 are moved outward (inward) to the right and left sides, a change in the orientation of the inner-wires 18a and 19a of the right and left wires 18 and 19 is transmitted to the right and left guide pulleys 46, and a relatively large moment is generated based on the length L2 between the extension axis P2 and the horizontal axis P4.

This moment changes the orientation of the right and left support members 16 (pulleys 15 and guide pulleys 46) diagonally outward (inward) to the right and left sides so as to follow the inner-wires 18a and 19a of the right and left wires 18 and 19.

### Other variations of Embodiments 1 and 2

The outer diameter of the extension end portion 2a of each of the arm portions 2 in Embodiment 1, the first variation of Embodiment 1, the second variation of Embodiment 1, Embodiment 2, the first variation of Embodiment 2, and the second variation of Embodiment 2 may be set larger than the outer diameter of the attachment portion 16b of the corresponding support member 16, and the attachment portion 16b of the support member 16 may be inserted into extension end portion 2a of the arm portion 2. According to this configuration, the bolt 31, the nut 29, and so on are provided at the extension end portion 2a of the arm portion 2.

The raising operation switch 23 may be provided on the left hand portion 20, and the lowering operation switch 24 may be provided on the right hand portion 20. Both the raising operation switch 23 and the lowering operation switch 24 may be provided on one of the right and left hand portions 20.

In addition to the configuration shown in FIGS. 1 and 2, various shapes of the hand portions 20 are envisioned, such as a hook shape that allows a package B to be hooked thereto, a pair of arms to sandwich a package B, and the configuration described in Embodiment 3.

The assist device may be configured to not have the right and left leg action portions 3.

### First variation of Embodiment 3

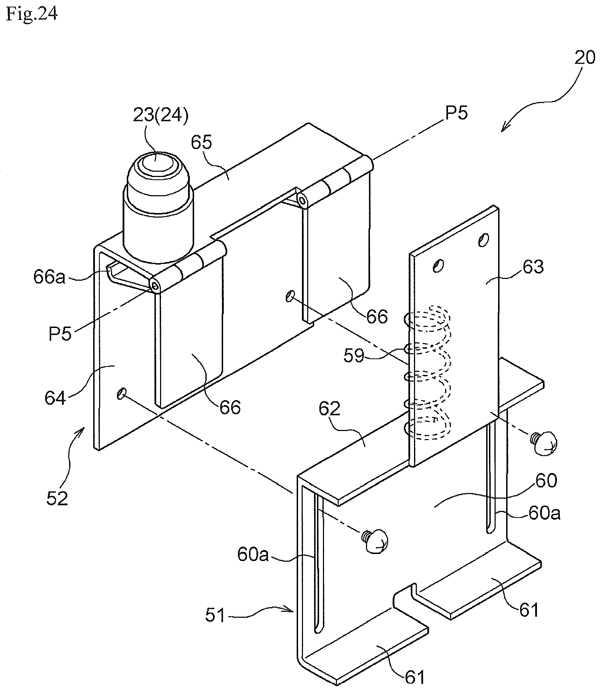

The hand portion 20 in Embodiment 3 may be the hand portion 20 shown in FIGS. 24, 25, and 26.

As shown in FIGS. 24, 25, and 26, the upper portion 62 of the first member 51 is formed to have the same width as the width of the lateral portion 60. In the second member 52, the inner portions 66 are supported so as to be capable of pivoting between a first position A1 and a second position A2 about a horizontal axis P5 at an end portion of the manual operation portion 65.

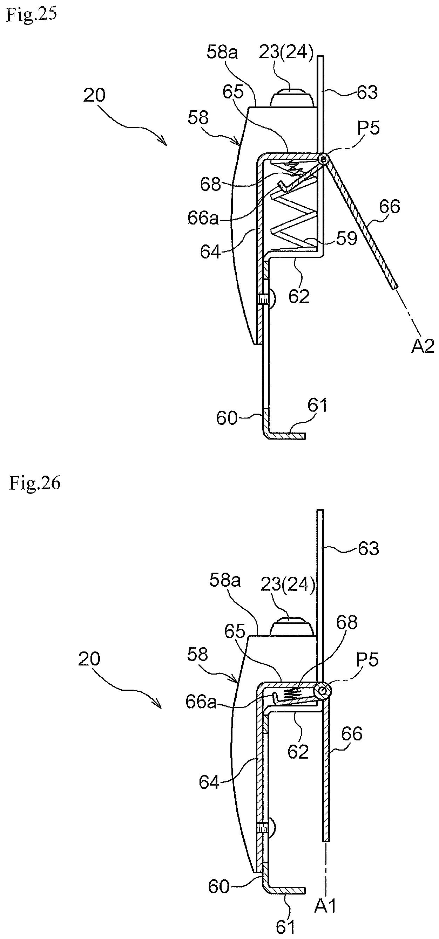

As shown in FIGS. 24 and 25, an arm portion 66a (corresponding to an interlocking operation portion) that is coupled to the inner portions 66 extends toward the movement support portion 64. A spring 68 (corresponding to an interlocking biasing portion) is connected while spanning between the manual operation portion 65 and the arm portion 66a of the inner portions 66, and the inner portion 66 is biased to the second position A2 by the spring 68.

The structure other than the above structure is the same as the structure of the hand portion 20 shown in FIGS. 19 and 20.

As shown in FIGS. 25, in a state where the manual operation portion 65 and the inner portions 66 are operated in the upward separating direction by the spring 59, the arm portion 66a of the inner portions 66 is separate from the upper portion 62, and the inner portions 66 are located at the second position A2 that is separate from the first position A1 on the side opposite to the lateral portion 60 side by the spring 68. Accordingly, the lower portion 61 and the inner portions 66 are open wide in the vertical direction and in the lateral direction.

As shown in FIGS. 25 and 26, if the upper portion 58a of the cover 58 is pressed downward, and the manual operation portion 65 is pressed downward via the upper portion 58a of the cover 58, the manual operation portion 65 and the inner portions 66 move in the downward approaching direction with the spring 59 being compressed.

As shown in FIG. 26, if, after the arm portion 66a of the inner portions 66 has abutted against the upper portion 62, the manual operation portion 65 and the inner portions 66 further move in the lower approaching direction, the arm portion 66a of the inner portions 66 is pushed up by the upper portion 62, and the inner portions 66 are operated to the first position A1, which is aligned with the inner side of the side wall portion B1 of the package B. As a result, the inner portions 66 are arranged in the vertical direction along the inner side of the side wall portion B1 of the package B.

In the state shown in FIG. 26, if the width (width in the left-right direction) of the side wall portion B1 of the package B is slightly larger, the inner portions 66 come into contact with the inner side of the side wall portion B1 of the package B and are pressed thereby, in a state where the inner portions 66 are operated to the first position A1. Thus, the package B is held while the side wall portion B1 thereof is sandwiched between the lateral portion 60 and the inner portions 66.

### Second variation of Embodiment 3

In the assist device, a single arm portion 2 may be provided while disusing the right and left arm portions 2.

According to this structure, two wires 18 extend from the single arm portion 2, the right hand portion 20 is connected to one of the two wires 18, and the left hand portion 20 is connected to the other one of the two wires 18. Alternatively, a single wire 18 extends from the single arm portion 2, an end portion of the single wire 18 is divided into two, the right hand portion 20 is connected to one the two divided portions, and the left hand portion 20 is connected to the other one of the divided portions.

The raising operation switch 23 may be provided on the left hand portion 20, and the lowering operation switch 24 may be provided on the right hand portion 20. Both the raising operation switch 23 and the lowering operation switch 24 may be provided on one of the right and left hand portions 20.

The assist device may be configured to not have the right and left leg action portions 3.

The assist device may employ a configuration in which the lifting/lowering device 17, the raising operation switch 23, and the lowering operation switch 24 are disused, the wires 18 and 19 are coupled to the main body portion 1 and the arm portions 2, and the positions of the hand portions 20 are fixed such that the hand portions 20 are not raised and lowered.

### Industrial Applicability

The present invention is also applicable to an assist device that is worn by a work and helps the worker hold a package, as well as to a winch, and the like.

### Description of Reference Signs

- 1:: Main body portion
- 2:: Arm portion
- 2a:: Extension end portion
- 15:: Rotating body
- 16:: Support member
- 16c:: Wire support portion
- 16f:: Engaging portion
- 17:: Lifting/lowering device
- 18, 19:: Wire
- 20:: Hand portion
- 23, 24:: Manual lifting/lowering operation portion
- 28:: Spline portion
- 30:: Spline portion
- 31:: Withdrawal prevention member
- 34:: Fixing portion
- 35a:: Engaging portion
- 46:: Guide portion
- 59:: Biasing portion
- 60:: Lateral portion
- 61:: Lower portion
- 62:: Upper portion
- 64:: Movement support portion
- 65:: Manual operation portion
- 66:: Inner portion
- 66a:: Interlocking operation portion
- 68:: Interlocking biasing portion
- A1:: First position
- A2:: Second position
- B:: Package
- B1:: Side wall portion
- P2:: Extension axis
- P3:: Lateral axis

## Claims

1. An assist device that includes: a main body portion (1) to be attached to a mid back portion of a worker; right and left arm portions (2) that extend forward from the main body portion (1); and a lifting/lowering device (17) that is provided in the main body portion (1) and is configured to wind and unwind right and left wires (18,19) that extend from the lifting/lowering device (17), the assist device comprising:
right and left support members (16) supported by the arm portions (2) so as to be capable of changing their orientations about respective extension axes (P2) parallel to directions in which the arm portions (2) extend; and
right and left rotating bodies (15) supported by the support members (16) so as to be capable of rotating about respective lateral axes (P3) that intersect the extension axes (P2),
wherein said right and left wires (18, 19) are wrapped around the rotating bodies (15) and extend downward from the rotating bodies (15), wherein
right and left hand portions (20) configured to hold a package are connected to extension ends of the wires (18, 19), and wherein
the lifting/lowering device (17) is configured to raise the hand portions (20) by winding the wires (18, 19), and the lifting/lowering device (17) is configured to lower the hand portions (20) by unwinding the wires (18, 19),
the assist device being **characterized by** comprising right and left fixing portions (34) capable of fixing and unfixing the support members (16) to and from the arm portions (2) at predetermined positions about the extension axes (P2).

2. The assist device according to claim 1,
wherein, as a result of the support members (16) being fitted to extension end portions (2a) of the arm portions (2), the support members (16) are supported by the extension end portions (2a) of the arm portions (2) so as to be capable of changing their orientations about the respective extension axes (P2), and
each of the fixing portions (34) include:
a first spline portion (30) attached to an extension end portion (2a) of a corresponding one of the arm portions (2);
a second spline portion (28) attached to a corresponding one of the support members (16); and
a withdrawal prevention member (31) configured to prevent the corresponding one of the support members (16) from withdrawing from the extension end portion (2a) of the corresponding one of the arm portions (2), in a state where the first spline portion (30) and the second spline portion (28) are fitted to each other.

3. The assist device according to claim 1,
wherein, as a result of the support members (16) being fitted to extension end portions (2a) of the arm portions (2), the support members (16) are supported by the extension end portions (2a) of the arm portions (2) so as to be capable of changing their orientations about the respective extension axes (P2), and
each of the fixing portions (34) include;
an engaging portion (16f) provided in one of an extension end portion (2a) of a corresponding one of the arm portions (2) and a corresponding one of the support members (16);
a plurality of engaged portions (35a) provided in a circumferential direction in the other one of the extension end portion (2a) of the corresponding one of the arm portions (2) and the corresponding one of the support members (16); and
a withdrawal prevention member (31) configured to prevent the corresponding one of the support members (16) from withdrawing from the extension end portion (2a) of the corresponding one of the arm portions (2), in a state where the engaging portion (16f) is engaged with the engaged portions (35a).

## Patentansprüche

1. Unterstützungsvorrichtung, die beinhaltet: einen Hauptkörperabschnitt (1), der an einem mittleren Rückenabschnitt eines Arbeiters angebracht werden soll, rechte und linke Armabschnitte (2), die sich von dem Hauptkörperabschnitt (1) nach vorne erstrecken, und eine Hebe-/Senkvorrichtung (17), die in dem Hauptkörperabschnitt (1) vorgesehen ist und dazu ausgestaltet ist, rechte und linke Kabel (18, 19) auf- und abzuwickeln, die sich von der Hebe-/Senkvorrichtung (17) weg erstrecken,
wobei die Unterstützungsvorrichtung umfasst:
rechte und linke Stützelemente (16), die durch die Armabschnitte (2) gestützt sind, sodass sie in der Lage sind, ihre Orientierungen um jeweilige Längsachsen (P2) herum parallel zu Richtungen zu ändern, in denen sich die Armabschnitte (2) erstrecken,
rechte und linke rotierende Körper (15), die durch die Stützelemente (16) gestützt sind, sodass sie in der Lage sind, um jeweilige seitliche Achsen (P3) zu rotieren, welche die Längsachsen (P2) schneiden,
wobei die rechten und linken Kabel (18, 19) um die rotierenden Körper (15) herum gewickelt sind und sich von den rotierenden Körpern (15) nach unten erstrecken, wobei rechte und linke Handabschnitte (20), die dazu ausgestaltet sind, ein Gepäck zu halten, mit Längsenden der Kabel (18, 19) verbunden sind, und wobei
die Hebe-/Senkvorrichtung (17) dazu ausgestaltet ist, die Handabschnitte (20) durch Aufwickeln der Kabel (18, 19) anzuheben, und die Hebe-/Senkvorrichtung (17) dazu ausgestaltet ist, die Handabschnitte (20) durch Abwickeln der Kabel (18, 19) abzusenken,
wobei die Unterstützungsvorrichtung **dadurch gekennzeichnet ist, dass** sie rechte und linke Befestigungsabschnitte (34) umfasst, die in der Lage sind, die Stützelemente (16) an den Armabschnitten (2) an vorbestimmten Positionen um die Längsachsen (P2) herum zu befestigen und sie von diesen zu lösen.

2. Unterstützungsvorrichtung nach Anspruch 1,
wobei als Ergebnis dessen, dass die Stützelemente (16) an Längsendabschnitten (2a) der Armabschnitte (2) montiert sind, die Stützelemente (16) durch die Längsendabschnitte (2a) der Armabschnitte (2) gestützt werden, sodass sie in der Lage sind, ihre Orientierungen um die jeweiligen Längsachsen (P2) herum zu ändern, und
jeder der Befestigungsabschnitte (34) beinhaltet:
einen ersten Keilwellenabschnitt (30), der an einem Längsendabschnitt (2a) eines entsprechenden der Armabschnitte (2) angebracht ist,
einen zweiten Keilwellenabschnitt (28), der an einem entsprechenden der Stützelemente (16) angebracht ist, und
ein Element (31) zur Verhinderung des Herausziehens, das dazu ausgestaltet ist, zu verhindern, dass das entsprechende der Stützelemente (16) aus dem Längsendabschnitt (2a) des entsprechenden der Armabschnitte (2) herausgezogen wird, in einem Zustand, in dem der erste Keilwellenabschnitt (30) und der zweite Keilwellenabschnitt (28) aneinander montiert sind.

3. Unterstützungsvorrichtung nach Anspruch 1,
wobei als Ergebnis dessen, dass die Stützelemente (16) an Längsendabschnitten (2a) der Armabschnitte (2) montiert sind, die Stützelemente (16) durch die Längsendabschnitte (2a) der Armabschnitte (2) gestützt werden, sodass sie in der Lage sind, ihre Orientierungen um die jeweiligen Längsachsen (P2) herum zu ändern, und
jeder der Befestigungsabschnitte (34) beinhaltet:
einen Eingriffsabschnitt (16f), der in einem von einem Längsendabschnitt (2a) eines entsprechenden der Armabschnitte (2) und einem entsprechenden der Stützelemente (16) vorgesehen ist,
mehrere in Eingriff gebrachte Abschnitte (35a), die in einer Umfangsrichtung in dem anderen von dem Längsendabschnitt (2a) des entsprechenden der Armabschnitte (2) und dem entsprechenden der Stützelemente (16) vorgesehen sind, und
ein Element (31) zur Verhinderung des Herausziehens, das dazu ausgestaltet ist, zu verhindern, dass das entsprechende der Stützelemente (16) aus dem Längsendabschnitt (2a) des entsprechenden der Armabschnitte (2) herausgezogen wird, in einem Zustand, in dem der Eingriffsabschnitt (16f) mit den in Eingriff gebrachten Abschnitten (35a) in Eingriff steht.

## Revendications

1. Dispositif d'assistance qui comprend : une partie de corps principal (1) destinée à être fixée à une partie du milieu du dos d'un travailleur ; des parties de bras droite et gauche (2) qui s'étendent vers l'avant à partir de la partie de corps principal (1) ; et un dispositif de levage/abaissement (17) qui est prévu dans la partie de corps principal (1) et est configuré pour enrouler et dérouler des fils droit et gauche (18, 19) qui s'étendent à partir du dispositif de levage/abaissement (17),
le dispositif d'assistance comprenant :
des éléments de support droit et gauche (16) supportés par les parties de bras (2) afin de pouvoir changer leurs orientations autour d'axes d'extension (P2) respectifs parallèles aux directions dans lesquelles les parties de bras (2) s'étendent ; et
des corps rotatifs droit et gauche (15) supportés par les éléments de support (16) afin de pouvoir tourner autour d'axes latéraux (P3) respectifs qui coupent les axes d'extension (P2),
dans lequel lesdits fils droit et gauche (18, 19) sont enroulés autour des corps rotatifs (15) et s'étendent vers le bas à partir des corps rotatifs (15), dans lequel des parties de main droite et gauche (20) configurées pour porter un chargement sont raccordées aux extrémités longitudinales des fils (18, 19), et dans lequel :
le dispositif de levage/abaissement (17) est configuré pour faire monter les parties de main (20) en enroulant les fils (18, 19), et le dispositif de levage/abaissement (17) est configuré pour baisser les parties de main (20) en déroulant les fils (18, 19),
le dispositif d'assistance étant **caractérisé en ce qu'**il comprend des parties de fixation droite et gauche (34) capables de fixer les éléments de support (16) aux parties de bras (2) dans des positions prédéterminées autour des axes d'extension (P2) et de détacher les éléments de support (16) des parties de bras (2).

2. Dispositif d'assistance selon la revendication 1,
dans lequel, du fait que les éléments de support (16) sont montés sur des parties d'extrémité d'extension (2a) des parties de bras (2), les éléments de support (16) sont supportés par les parties d'extrémité d'extension (2a) des parties de bras (2) afin de pouvoir changer leurs orientations autour des axes d'extension (P2) respectifs, et
chacune des parties de fixation (34) comprend :
une première partie de cannelure (30) fixée sur une partie d'extrémité d'extension (2a) d'une partie de bras correspondante des parties de bras (2);
une deuxième partie de cannelure (28) fixée à un élément de support correspondant des éléments de support (16); et
un élément de prévention de retrait (31) configuré pour empêcher l'élément de support correspondant des éléments de support (16) de se retirer de la partie d'extrémité d'extension (2a) de la partie de bras correspondante des parties de bras (2), dans un état dans lequel la première partie de cannelure (30) et la deuxième partie de cannelure (28) sont engagées l'une avec l'autre.

3. Dispositif d'assistance selon la revendication 1,
dans lequel, du fait que les éléments de support (16) sont montés sur des parties d'extrémité d'extension (2a) des parties de bras (2), les éléments de support (16) sont supportés par les parties d'extrémité d'extension (2a) des parties de bras (2) afin de pouvoir changer leurs orientations autour des axes d'extension (P2) respectifs, et
chacune des parties de fixation (34) comprend :
une partie de mise en prise (16f) prévue dans l'un parmi une partie d'extrémité d'extension (2a) d'une partie de bras correspondante des parties de bras (2) et un élément de support correspondant des éléments de support (16) ;
une pluralité de parties mises en prise (35a) prévues dans une direction circonférentielle dans l'autre parmi la partie d'extrémité d'extension (2a) de la partie de bras correspondante des parties de bras (2) et l'élément de support correspondant des éléments de support (16) ; et
un élément de prévention de retrait (31) configuré pour empêcher l'élément de support correspondant des éléments de support (16) de se retirer de la partie d'extrémité d'extension (2a) de la partie de bras correspondante des parties de bras (2), dans un état dans lequel la partie de mise en prise (16f) est mise en prise avec les parties mises en prise (35a).
